(19) Europäisches Patentamt / European Patent Office / Office européen des brevets

(11) **EP 3 775 085 B1**

(12) # EUROPEAN PATENT SPECIFICATION

(45) Date of publication and mention of the grant of the patent:
**24.07.2024 Bulletin 2024/30**

(21) Application number: **19720220.3**

(22) Date of filing: **01.04.2019**

(51) International Patent Classification (IPC):
***C09J 183/04*** *(2006.01)*

(52) Cooperative Patent Classification (CPC):
(C-Sets available)
**C09J 183/04;** C08G 77/04; C08G 77/12; C08G 77/16; C08G 77/20 (Cont.)

(86) International application number:
**PCT/US2019/025141**

(87) International publication number:
**WO 2019/195145 (10.10.2019 Gazette 2019/41)**

(54) **SILOXANE-BASED GEL ADHESIVES**
GELKLEBSTOFFE AUF SILOXANBASIS
ADHÉSIFS EN GEL À BASE DE SILOXANE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2018 US 201862652950 P**

(43) Date of publication of application:
**17.02.2021 Bulletin 2021/07**

(73) Proprietor: **Solventum Intellectual Properties Company**
**Maplewood, MN 55144 (US)**

(72) Inventors:
- **LIU, Junkang J.**
  **Saint Paul, Minnesota 55133-3427 (US)**
- **POHL, Dennis J.**
  **Saint Paul, Minnesota 55133-3427 (US)**
- **SOTO CANTU, Erick I.**
  **Saint Paul, Minnesota 55133-3427 (US)**
- **TSE, Kiu-Yuen**
  **Saint Paul, Minnesota 55133-3427 (US)**
- **TOURIS, Athanasios**
  **St Paul, Minnesota 55102 (US)**
- **HUIKKO, Katri M.**
  **Saint Paul, Minnesota 55133-3427 (US)**

(74) Representative: **Vossius & Partner**
**Patentanwälte Rechtsanwälte mbB**
**Siebertstrasse 3**
**81675 München (DE)**

(56) References cited:
**US-A1- 2011 212 325**
**US-A1- 2015 376 345**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09J 183/04, C08L 83/00**

## Description

### Field of the Disclosure

This disclosure relates to siloxane-based gels that may be used to form adhesive articles, such as tapes and other medical articles useful in medical applications.

### Background

A wide range of adhesive articles are used in medical applications. These adhesive articles include gels used to attach electrodes and other sensing devices to the skin of a patient, a wide range of tapes to secure medical devices to a patient, and adhesive dressings used to cover and protect wounds.

Many of the adhesive articles use pressure sensitive adhesives. Pressure sensitive adhesives are well known to one of ordinary skill in the art to possess certain properties at room temperature including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are natural rubber, synthetic rubbers (e.g., styrene/butadiene copolymers (SBR) and styrene/isoprene/styrene (SIS) block copolymers), various (meth)acrylate (e.g., acrylate and methacrylate) copolymers, and silicones.

One problem with using adhesive articles for medical applications is that the removal of adhesive article can cause trauma to the skin. This is particularly troublesome in patients with sensitive skin, such as infants and the elderly, and can become severe with chronic patients where adhesive articles are repeatedly attached and removed over a long term period.

Various attempts have been made to mitigate this problem with adhesive articles. In particular, health care professionals utilize removal techniques to mitigate skin trauma. One way to mitigate trauma to the skin is to remove the adhesive article using a slow peel at a high angle to avoid stretching the skin. Another way to mitigate trauma, when the adhesive article is stretchable, is to pull straight out (as close to a 0° angle as possible) to induce stretch releasing of the adhesive layer from the skin. Also, manufactures of adhesive articles have developed articles that mitigate skin trauma by reducing adhesion to skin. So called "gentle-to-skin adhesives" have been developed that do not strip off skin cells significantly when removed.

A variety of gentle-to-skin articles and dressings that use gentle-to-skin adhesives have been described. A gentle-to-skin adhesive is described in US Patent Publication No. 2011/0212325 (Determan et al.) which describes an electron beam and gamma radiation crosslinked silicone gel adhesive that may use either nonfunctional or functional poly diorganosiloxanes. In US Patent No. 4,838,253 (Brassington, et al.), a silicone gel coated dressing is described. In US Patent No. 6,051,747 (Lindqvist, et al.), a foam absorbent dressing is described wherein the foam dressing is coated with a layer of hydrophobic gel. Also, US Patent No. 5,891,076 (Fabo) describes a hypertrophic scar dressing that includes silicone-gel on that side of the dressing which lies against the user's skin and a flexible carrier sheet embodied within the silicone-gel such that the gel forms continuous layers on both sides of the carrier, and US Patent Publication No. 2010/0331785 (Fabo et al.) describes a dressing that includes a liquid impermeable film layer coated with a skin friendly adhesive on the side intended to adhere to the skin. US2015/376345A1 discloses an adhesive gel composition based on a cured hydroxy-functional polysiloxane resin and comprising extractable siloxane fluid present at up to 40% by weight.

### Summary

This disclosure relates to siloxane-based gels that may be used to form adhesive articles, such as tapes and other medical articles useful in medical applications. Also disclosed are articles that include the siloxane-based gels and methods of preparing the articles.

The gel adhesive composition comprises a crosslinked polymeric siloxane matrix, and a polymeric fluid with a weight average molecular weight greater than 275,000 grams/mole. The polymeric fluid is extractable, and the weight percentage of the extractable polymeric fluid comprises 26-80 weight % of the gel adhesive composition. The extractable polymeric fluid comprises a siloxane fluid described by Formula 1 of claim 1. In many embodiments, the gel adhesive composition further comprises a siloxane tackifying resin.

Also disclosed are gel adhesive articles. The gel adhesive article comprises a substrate with a first major surface and a second major surface; and a gel adhesive composition disposed on at least a portion of the first major surface of the substrate. The gel adhesive composition comprises a crosslinked polymeric siloxane matrix, and a polymeric fluid

with a weight average molecular weight greater than 275,000 grams/mole, where the polymeric fluid is extractable, the weight percentage of the extractable polymeric fluid comprises 26-80 weight % of the gel adhesive composition, and the polymeric fluid is a siloxane polymeric fluid described by Formula 1 of claim 7. In some embodiments, the gel adhesive composition further comprises a siloxane tackifying resin. The articles have an array of desirable properties. In some embodiments, the gel adhesion article has a 180° Peel Adhesion value to stainless steel of at least 10.0 Newtons/decimeter. In some embodiments, the gel adhesion composition has a Skin Peel Adhesion value of greater than 100 grams/inch. In some embodiments, the gel adhesion composition has a BCA value of 10 micrograms per milliliter or less.

In other embodiments of the articles of this disclosure, the gel adhesive article comprises a substrate with a first major surface and a second major surface, and a gel adhesive composition disposed on at least a portion of the first major surface of the substrate, at a thickness of from 25 micrometers to 102 micrometers. The gel adhesive composition comprises a crosslinked polymeric siloxane matrix, a polymeric fluid, where the polymeric fluid is extractable, and where the weight percentage of the extractable polymeric fluid comprises 26-80 weight % of the gel adhesive composition, and at least one siloxane tackifying resin. The gel adhesive article has a 180° Peel Adhesion value to stainless steel of at least 10.0 Newtons/decimeter, and a Skin Peel Adhesion value of greater than 100 grams/inch.

The disclosure also includes methods for preparing gel adhesive articles. In some embodiments, the method for preparing a gel adhesive article comprises providing a substrate with a first major surface and a second major surface, providing a gel adhesive precursor composition, wherein the gel adhesive precursor composition upon crosslinking comprises a gel adhesive composition as described above, disposing the gel adhesive precursor composition on at least a portion of the first major surface of the substrate, and crosslinking the gel adhesive precursor composition. In some embodiments, providing a gel adhesive precursor composition comprises preparing a reactive mixture comprising at least one thermally curable siloxane, optionally at least one thermally curable crosslinker, at least one non-reactive siloxane fluid, and at least one thermal catalyst, and thermally curing the reaction mixture. This embodiment may further comprise crosslinking where crosslinking comprises electron beam curing the thermally cured reaction mixture. In other embodiments, the gel adhesive precursor composition comprises at least one non-reactive siloxane fluid; and crosslinking comprises electron beam curing.

**Detailed Description**

The use of adhesive products in the medical industry has long been prevalent, and is increasing. However, while adhesives and adhesive articles have shown themselves to be very useful for medical applications, there are also issues in the use of adhesives and adhesive articles. Medical adhesive-related skin injury (MARSI) has a significant negative impact on patient safety. Skin injury related to medical adhesive usage is a prevalent but under recognized complication that occurs across all care settings and among all age groups. In addition, treating skin damage is costly in terms of service provision, time, and additional treatments and supplies.

Skin Injury occurs when the superficial layers of the skin are removed along with the medical adhesive product, which not only affects skin integrity but can cause pain and the risk of infection, increase wound size, and delay healing, all of which reduce patients' quality of life.

Medical adhesive tape can be simply defined as a pressure-sensitive adhesive and a backing that acts as a carrier for the adhesive. The US Food and Drug Administration more specifically defines a medical adhesive tape or adhesive bandage as "a device intended for medical purposes that consists of a strip of fabric material or plastic, coated on one side with an adhesive, and may include a pad of surgical dressing without a disinfectant. The device is used to cover and protect wounds, to hold together the skin edges of a wound, to support an injured part of the body, or to secure objects to the skin."

While the pathophysiology of MARSI is only partially understood. Skin injury results when the skin to adhesive attachment is stronger than skin cell to skin cell attachment. When adhesive strength exceeds the strength of skin cell to skin cell interactions, cohesive failure occurs within the skin cell layer.

The intrinsic characteristics of all components of an adhesive product must then be taken into account to address these factors that may lead to MARSI. Properties of the adhesive to be considered include cohesiveness over time and the corresponding adhesion strength; properties of the tape/backing/dressing to be considered include breathability, stretch, conformability, flexibility, and strength.

The widespread use of adhesives in medical applications has led to the development of adhesives and adhesive articles that are gentle to the skin. Some of these adhesives are pressure sensitive adhesives and others are gel adhesives. The application of pressure sensitive adhesives, including silicone pressure sensitive adhesives, for adhering to skin is known in the art and many examples are commercially available. However, some pressure sensitive adhesives have issues that limit their use for adhesion to skin. For instance, skin damage may result during the removal of a pressure sensitive adhesive that exhibits surface adhesion to skin that is too high. Alternatively, if the surface adhesion to skin is reduced, the pressure sensitive adhesive may lack sufficient holding power to be useful. Additionally, some pressure sensitive adhesives that are relatively rigid or non-conformable compared to skin typically result in considerable

patient discomfort during use. Also, even adhesives that have a measured low peel adhesion to skin may cause discomfort during removal, e.g., if the adhesive becomes surface attached around hair.

Another class of adhesives used in medical applications are silicone gels. As used herein, the terms "siloxane" and "silicone" are used interchangeably. The term siloxane is replacing silicone in common usage, but both terms are used in the art. Silicone gel (crosslinked poly dimethylsiloxane ("PDMS")) materials have been used for dielectric fillers, vibration dampers, and medical therapies for promoting scar tissue healing. Commercially available silicone gels are soft, tacky, elastic materials that comprise relatively high levels of fluids (liquids). Silicone gels are typically softer than silicone pressure sensitive adhesives, resulting in less discomfort when adhered to and removed from skin. The combination of low skin trauma upon removal and low skin irritation upon wearing, make silicone gels suitable for gentle to skin adhesive applications.

Examples of commercially available silicone gel adhesive systems include products marketed with the trade names: Dow Corning MG 7-9850, WACKER 2130, BLUESTAR 4317 and 4320, and NUSII, 6345 and 6350. These gentle to the skin adhesives are formed by an addition cure reaction between vinyl-terminated PDMS and hydrogen terminated PDMS, in the presence of a hydrosilylation catalyst (e.g., platinum complex). Vinyl-containing and hydrogen-containing PDMS chains are referred to as 'functionalized' silicones due to their specific curable chemical moieties. Individually, such functional silicones are generally not reactive; however, together they form a reactive silicone system. Generally, due to processing requirements such as the need to be solventless, the desired formulation lifetime, and the reaction kinetics of the curing reactions, these reactive siloxane systems typically use functional PDMS fluids with low viscosities and thus low molecular weights. Additionally, silicone resins (tackifiers sometimes referred to as "silicate resins") and PDMS with multiple hydrogen functionalities (crosslinkers) can be formulated to modify the adhesive properties of the gel.

There are downsides to the use of these types of materials. For example, they required the use of specialized "functionalized" silicone materials. Also, they typically require the use of a catalyst, often a heavy metal-containing catalyst such as platinum or palladium catalysts. These catalysts are expensive and leave heavy metal-containing residues in the cured compositions. An alternative to the catalyst-promoted curing of such silicone materials is the use of free radical polymerization to cure or crosslink the silicone pressure sensitive adhesive or gel formulations. These polymerizations require initiation by a free radical source, such as, for example, the high temperature degradation of organic peroxides. However, organic peroxides can be unstable and even explosive and thus can be undesirable. Also, these cured materials, while they may be gentle to the skin, they generally have low adhesive holding power and low skin adhesion. Low skin adhesion and low adhesive holding power is often the trade off to achieve low skin trauma adhesives.

Recently siloxane-based gel adhesives and sealants have been prepared that cure and crosslink at room temperature without generating undesirable catalyst or initiator residues and do not require specialized functionalized starting materials, rather they are prepared either from silanol-functional siloxane materials or siloxane materials without any reactive functional groups. These siloxane-based gel compositions can be formed by a condensation reaction in the case of silanol-functional materials, or by the generation of free radicals by exposure to an electron beam (e-beam) or gamma radiation in the case of siloxane materials without any reactive functional groups. In the condensation reaction, two silanol groups (that is to say, terminal -SiOH groups) condense to form -Si-O-Si- linkages and a molecule of water ($H_2O$).

These siloxane-based gel adhesives and sealants have excellent wetting and flow characteristics, due to the very low glass transition temperature (Tg) and modulus of the polysiloxane network and achieve their adhesive holding power on the rough skin surface due to mechanical interlock and energy dissipation within the gel adhesive. Additionally, the low surface adhesion of silicone gels prevent the adhesive from tightly attaching to hair or skin cells during skin wear, further reducing the instance of pain during removal. This results in minimal to no skin trauma upon removal.

Thus the use of pressure sensitive adhesives in medical applications have issues because they can have good adhesion to a wide variety of substrates (for example, to skin as well as to tubing, drapes, tape backings, and the like) but they can cause skin damage. Gel adhesives on the other hand can have desired low skin trauma, but these adhesives also have low adhesion, both to skin and to other substrates such as tubing, drapes, tape backings, and the like. Thus the need remains for adhesives suitable for medical uses that have high adhesion to a wide range of substrates without causing skin damage.

The present disclosure includes gel adhesive compositions, gel adhesive articles and methods of making gel adhesive articles. The gel adhesive compositions comprise a crosslinked polymeric siloxane matrix and a polymeric fluid with a weight average molecular weight greater than 275,000 grams/mole, where the polymeric fluid is extractable, and where the weight percentage of the extractable polymeric fluid comprises 26-80 weight % of the gel adhesive composition. The extractable polymeric fluid is a siloxane polymeric fluid described by Formula 1 of claim 1. In some embodiments, the gel adhesive composition further comprises a siloxane tackifying resin.

Also disclosed herein are gel adhesive articles. The gel adhesive article comprises a substrate with a first major surface and a second major surface, and a gel adhesive composition disposed on at least a portion of the first major

surface of the substrate, where the gel adhesive composition comprises a crosslinked polymeric siloxane matrix, and a polymeric fluid with a weight average molecular weight greater than 275,000 grams/mole, where the polymeric fluid is extractable, and wherein the weight percentage of the extractable polymeric fluid comprises 26-80 weight % of the gel adhesive composition. The extractable polymeric fluid is a siloxane polymeric fluid described by Formula 1 of claim 7.

In some embodiments, the gel adhesive composition further comprises at least one siloxane tackifying resin. In other embodiments, the gel adhesive articles comprise a substrate with a first major surface and a second major surface, and a gel adhesive composition disposed on at least a portion of the first major surface of the substrate, at a thickness of from 10 micrometers to 152 micrometers, and wherein the gel adhesive composition comprises a crosslinked polymeric siloxane matrix, a polymeric fluid, wherein the polymeric fluid is extractable, and where the weight percentage of the extractable polymeric fluid comprises 26-80 weight % of the gel adhesive composition, and at least one siloxane tackifying resin. The gel adhesive article has a 180° Peel Adhesion value to stainless steel of at least 10.0 Newtons/decimeter, and a Skin Peel Adhesion value of greater than 100 grams/inch.

Methods for preparing a gel adhesive article comprise providing a substrate with a first major surface and a second major surface, providing a gel adhesive composition, and disposing the gel adhesive composition on at least a portion of the first major surface of the substrate. The gel adhesive compositions are described above.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein.

As used in this specification and the appended claims, the singular forms "a", "an", and "the" encompass embodiments having plural referents, unless the content clearly dictates otherwise. For example, reference to "a layer" encompasses embodiments having one, two or more layers. As used in this specification and the appended claims, the term "or" is generally employed in its sense including "and/or" unless the content clearly dictates otherwise.

The term "adhesive" as used herein refers to polymeric compositions useful to adhere together two adherends. Examples of adhesives are pressure sensitive adhesives and gel adhesives.

Pressure sensitive adhesive compositions are well known to those of ordinary skill in the art to possess properties including the following: (1) aggressive and permanent tack, (2) adherence with no more than finger pressure, (3) sufficient ability to hold together two adherends, and (4) sufficient cohesive strength to be cleanly removable from the adherend. Materials that have been found to function well as pressure sensitive adhesives are polymers designed and formulated to exhibit the requisite viscoelastic properties resulting in a desired balance of tack, peel adhesion, and shear holding power. Obtaining the proper balance of properties is not a simple process.

As used herein, the term "gel adhesive" refers to a tacky semi-solid crosslinked matrix containing a liquid or a fluid that is capable of adhering to one or more substrates. Fluid as used herein refers to materials that flow and includes not only liquids but also gums. The gel adhesives may have some properties in common with pressure sensitive adhesives, but they are not pressure sensitive adhesives.

The term "siloxane or siloxane-based" as used herein refers to polymers that contain units with dialkyl or diaryl siloxane (-SiRzO-) repeating units. The siloxane-based polymers may be segmented copolymers or polysiloxane polymers. The terms silicone and siloxane are used interchangeably.

The term "unsaturated" when referring to functional groups, refers to a carbon-carbon multiple bond, typically a carbon-carbon double bond. When an unsaturated double bond is a terminal group, it is generally referred to as an ethylenically unsaturated group, which has the general structure $-CH=CH_2$. Ethylenically unsaturated groups are also sometimes called "free radically polymerizable groups". Examples of unsaturated groups are vinyl groups and (meth)acrylate groups.

The term "(meth)acrylate" refers to monomeric acrylic or methacrylic esters of alcohols. Acrylate and methacrylate monomers or oligomers are referred to collectively herein as "(meth)acrylates". Materials referred to as "(meth)acrylate functional" are materials that contain one or more (meth)acrylate groups.

The term "curing" as used herein refers to a polymerization reaction in which reactive groups, either present in a molecule or generated by an activation mechanism, react to form a higher molecular weight molecule. This reaction may or may not involve crosslinking. The term "crosslinking" refers to a reaction that forms a polymeric matrix, where all of the component elements of the matrix are linked together such that none of the components contained within the matrix are extractable. While in the polymer arts the terms "curing" and "crosslinking" are used interchangeably, it should be noted that not all curing reactions involve crosslinking.

As used herein the term "polymer" refers to a macromolecule that is a homopolymer or a copolymer. As used herein, the term "homopolymer" refers to a polymeric material that is the reaction product of one monomer, and the term "copolymer" refers to a polymeric material that is the reaction product of at least two different monomers.

The term "alkyl" refers to a monovalent group that is a radical of an alkane, which is a saturated hydrocarbon. The alkyl can be linear, branched, cyclic, or combinations thereof and typically has 1 to 20 carbon atoms. In some

embodiments, the alkyl group contains 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, and ethylhexyl. Simple alkyl groups are abbreviated herein as methyl = Me, ethyl = Et, n-propyl = Pr.

The term "aryl" refers to a monovalent group that is aromatic and carbocyclic. The aryl can have one to five rings that are connected to or fused to the aromatic ring. The other ring structures can be aromatic, non-aromatic, or combinations thereof. Examples of aryl groups include, but are not limited to, phenyl, biphenyl, terphenyl, anthryl, naphthyl, acenaphthyl, anthraquinonyl, phenanthryl, anthracenyl, pyrenyl, perylenyl, and fluorenyl. The simple aryl group phenyl is abbreviated herein as Ph.

The term "alkoxy" refers to a monovalent group of formula $-OR^a$ where $R^a$ is an alkyl group. The term "aryloxy" refers to a monovalent group of formula $-OR^a$ where $R^a$ is an aryl group.

The term "alkylene" refers to a divalent group that is a radical of an alkane. The alkylene can be straight-chained, branched, cyclic, or combinations thereof. The alkylene often has 1 to 20 carbon atoms. In some embodiments, the alkylene contains 1 to 18, 1 to 12, 1 to 10, 1 to 8, 1 to 6, or 1 to 4 carbon atoms. The radical centers of the alkylene can be on the same carbon atom (i.e., an alkylidene) or on different carbon atoms.

The term "heteroalkylene" refers to a divalent group that includes at least two alkylene groups connected by a thio, oxy, or -NR- where R is alkyl. The heteroalkylene can be linear, branched, cyclic, substituted with alkyl groups, or combinations thereof. Some heteroalkylenes are poloxyyalkylenes where the heteroatom is oxygen such as for example, $-CH_2CH_2(OCH_2CH_2)_nOCH_2CH_2-$.

The term "arylene" refers to a divalent group that is carbocyclic and aromatic. The group has one to five rings that are connected, fused, or combinations thereof. The other rings can be aromatic, non-aromatic, or combinations thereof. In some embodiments, the arylene group has up to 5 rings, up to 4 rings, up to 3 rings, up to 2 rings, or one aromatic ring. For example, the arylene group can be phenylene.

The term "aralkylene" refers to a divalent group of formula $-R^a-Ar^a-$ where $R^a$ is an alkylene and $Ar^a$ is an arylene (i.e., an alkylene is bonded to an arylene).

The term "condensable end group" refers to a monovalent self-reactive terminal group of general formula: -SiRz(OX), where R is an alkyl group and X is a H or R group.

Disclosed herein are gel adhesive compositions. The gel adhesive compositions comprise a crosslinked polymeric siloxane matrix, and a polymeric fluid with a weight average molecular weight greater than 275,000 grams/mole, where the polymeric fluid is extractable, and where the weight percentage of the extractable polymeric fluid comprises 26-80 weight % of the gel adhesive composition. The extractable polymeric fluid is a siloxane polymeric fluid described by Formula 1 of claim 1. The gel adhesive composition may also comprise at least one siloxane tackifying resin.

As was discussed above, the current disclosure relates to gel adhesive compositions that have a higher adhesion than is typically seen with gel adhesives without sacrificing the desirable property of low skin trauma that is present in gel adhesives described as "gentle to the skin". The current gel adhesives are gel adhesives and not pressure sensitive adhesives. Gel adhesives comprise a crosslinked polymeric matrix and a fluid. While not wishing to be bound by theory, it has been found surprisingly that when the fluid component of the gel adhesive composition has a combination of characteristics, the resulting gel adhesive composition has a composition and structure that permits the gel adhesive composition to display the desired properties of high adhesion and low skin trauma. Among these characteristics are that the fluid is a polymeric fluid that is extractable, that the extractable fluid comprises 26-80 weight % of the gel adhesive composition, the extractable fluid has a weight average molecular weight of greater than 275,000 grams/mole, and the extractable polymeric fluid is a siloxane polymeric fluid described by Formula 1 of claim 1.

A wide range of crosslinked polymeric siloxane matrices are suitable for use in the gel adhesive compositions. The matrices can be prepared in a variety of ways. The crosslinked polymeric siloxane matrix can be prepared by thermal curing, condensation curing, radiation curing, or a combination thereof.

Examples of thermal curing include peroxide curing and hydrosilylation. In peroxide curing, a peroxide initiator is added to an uncrosslinked siloxane composition. Upon heating the peroxide decomposes to form radicals which react with siloxane to form polymeric radicals. The polymeric radicals combine to form crosslinks. A wide variety of peroxides have been found to be suitable, such as di-acyl peroxides and peroxy esters containing substituted or unsubstituted alkyl or aryl groups. If the siloxane contains vinyl groups, the crosslinking reaction is generally much more facile and a class of peroxides called "vinyl specific peroxides" can be used to crosslink these materials. Examples of vinyl specific peroxides include di-aralkyl peroxides, alkyl-aralkyl peroxides, and di-alkyl peroxides. Thus, peroxide curing can be achieved either with non-functional siloxane materials or vinyl-functional siloxane materials.

Hydrosilylation, also called catalytic hydrosilation, describes the addition of Si-H bonds across unsaturated bonds. When hydrosilylation is used for curing, typically both the Si-H and unsaturated bonds are present on siloxane molecules, either the same molecule or on different molecules. The hydrosilylation reaction is typically catalyzed by a platinum catalyst, and generally heat is applied to effect the curing reaction. In this reaction, the Si-H adds across the double bond to form new C-H and Si-C bonds. This process in described, for example, in PCT Publication No. WO

2000/068336 (Ko et al.), and PCT Publication Nos. WO 2004/111151 and WO 2006/003853 (Nakamura).

Another method of curing is condensation curing. Two related reaction types are included as condensation reactions. The first is the condensation reaction itself, the second is moisture curing, which is a 2-step condensation curing reaction. The difference between these two condensation reactions is the starting materials used. In the condensation reaction silanol groups (-SiOH) are present in the reactants, whereas in the moisture curing reaction, the reactive groups are precursor groups that react with water to form silanol groups. These formed silanol groups then undergo the condensation reaction.

Condensation reactions involve the reaction of two silanol groups to form a -Si-O-Si-linkage and a molecule of water. As mentioned above, if the reactants contain silanol groups, this condensation reaction proceeds to form the cured matrix. In the moisture curing reaction, the reactants are precursors to silanols, typically alkoxy or aryloxy silanes (-SiOR). These precursor groups react with water (such as moisture in the air) to form silanol groups and a molecule of alcohol. The formed silanol groups then react by condensation to form a -Si-O-Si- linkage. This sequence is summarized in Reaction Scheme 1 below:

$$\text{-Si-OR} + H_2O \rightarrow \text{-Si-OH} + \text{ROH} \quad \text{-Si-OH} + \text{-Si-OH} \rightarrow \text{-Si-O-Si-} + H_2O$$ Reaction Scheme 1

In this reaction scheme, the first step is the reaction of the precursor with water to form silanol groups (a hydrolyisis reaction), and the second step is the condensation reaction. Typically the moisture curing reaction is facilitated by a catalyst. Examples of suitable curing catalysts for this moisture curing reaction include alkyl tin derivatives (e.g., dibutyltindilaurate, dibutyltindiacetate, and dibutyltindioctoate commercially available as "T-series Catalysts" from Air Products and Chemicals, Inc. of Allentown, Pa.), and alkyl titanates (e.g., tetraisobutylorthotitanate, titanium acetylacetonate, and acetoacetic ester titanate commercially available from DuPont under the designation "TYZOR"). Other catalysts useful for the moisture curing reaction include acids, anhydrides, and lower alkyl ammonium salts thereof which include but are not limited to those selected from the group consisting of trichloroacetic acid, cyanoacetic acid, malonic acid, nitroacetic acid, dichloroacetic acid, difluoroacetic acid, trichloroacetic anhydride, dichloroacetic anhydride, difluoroacetic anhydride, triethylammonium trichloroacetate, trimethylammonium trichloroacetate, and mixtures thereof.

A particularly suitable curing mechanism for forming the crosslinked polymeric matrix of this disclosure is radiation curing. A variety of radiation sources are suitable, especially UV (ultraviolet), E-beam (electron beam), and gamma ray radiation. An advantage of E-beam and gamma ray radiation is that non-functional siloxane materials are curable in this way and no initiators or catalysts are required, as described, for example, in PCT Publication Nos. WO 2010/056541 and 2010/056543 (Liu et al.). Additionally, the level of crosslinking desired can be controlled by controlling the level of E-beam or gamma ray radiation used. E-beam or gamma ray radiation can also be used to form crosslinks in a non-crosslinked siloxane polymer layer. For example, a di-functional silanol material could be cured to form a polymeric layer containing high molecular weight linear polymers, and this layer could then be exposed to E-beam or gamma ray radiation to crosslink the high molecular weight linear polymers to form a crosslinked matrix.

UV curing is another type of radiation curing, in which UV light triggers a UV sensitive catalyst or initiator included in the reactive composition to initiate the curing reaction. Examples of UV curing include UV free radical curing, where a UV sensitive free radical initiator is present in the curable composition, and free radically polymerizable groups are present on the reactive PDMS, such as are described in US Patent No. 5,091,483 (Mazurek et al.). UV radiation is used to activate the free radical initiator which forms free radicals that initiate the curing reaction. Typically, the free radically polymerizable groups are ethylenically unsaturated. Examples of suitable ethylenically unsaturated siloxanes include (meth)acrylate functional siloxanes and/or vinyl-functional or allyl-functional siloxanes. (Meth)acrylate-functional siloxanes can be prepared by, for example, the reaction of amine-functional siloxanes with isocyanate-functional (meth)acrylates. In some embodiments, the ethylenically unsaturated siloxanes are co-polymerized with additional free radically polymerized monomers. The free radical polymerization can be carried out under a variety of conditions using a variety of different types of free radical initiators. Photoinitiators have been found to be particularly suitable as describe in US Patent No. 5,514,730 (Mazurek). Cationic curing is another example of UV curing, where an iodonium photocatalyst is present in the curing composition and cation reactive epoxy groups are present on the reactive PDMS, as described, for example, in US Patent No. 6,610,760 (Eckberg, et al.). Another example of UV curing is UV triggered radical coupling, where a UV triggered hydrogen abstraction catalyst, e.g. triazine, is present in the curing composition, as described in PCT Publication No. WO 2014/074336 (Chatterjee, et al.). Each of these UV curing mechanisms utilize either a specific reactive type of PDMS (free radically polymerizable PDMS or epoxy functional PDMS) or the use of hydrogen abstraction catalyst like a triazine to effect the curing.

As was described above, a wide range of curing reactions can be used to produce the crosslinked siloxane matrix of the gel adhesive compositions of this disclosure. Because of this flexibility in the possible curing reactions, a wide range of materials can be used to prepare the crosslinked siloxane matrix, depending upon the curing reaction or combination of curing reactions used to form the crosslinked matrix. In applications that use thermal curing, the materials used to form the crosslinked siloxane matrix can be either non-functional or vinyl-functional if peroxide curing is used

or a combination of vinyl-functional and silyl-hydride functional if hydrosilylation curing is used. If condensation curing is used, the materials used are either hydroxyl-functional (for condensation curing) or alkoxy-functional or aryloxy-functional (for moisture curing). If radiation curing is used, the materials are either ethylenically unsaturated or epoxy-functional (for UV initiated curing) or hydroxyl-functional or non-functional (for E-beam, gamma ray, or UV initiated hydrogen abstraction curing).

A wide variety of siloxane materials are suitable to form the crosslinked siloxane matrices of this disclosure. Generally, the siloxane materials are fluids that are described by Formula 1 below:

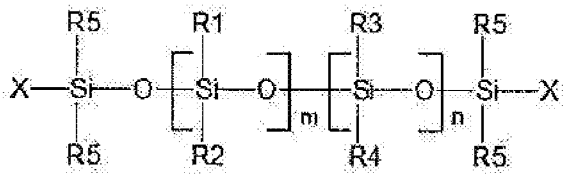

Formula 1

wherein R1, R2, R3, and R4 are independently selected from the group consisting of an alkyl group, an aryl group and a functional group, each R5 is an alkyl group, each X is a functional or a non-functional group, and n and m are integers, and at least one of m or n is not zero. In some embodiments, one or more of the alkyl or aryl groups may contain a halogen substituent, e.g., fluorine. For example, in some embodiments, one or more of the alkyl groups may be $-CH_2CH_2C_4F_9$.

Formula 1 can be used to describe: a hydroxyl-functional polysiloxane; a hydride-functional polysiloxane; an alkoxysilane-functional polysiloxane; a vinyl-functional polysiloxane; an allyl-functional polysiloxane; a (meth)acrylate-functional polysiloxane; a non-functional polysiloxane; or a combination thereof. When Formula 1 is a hydroxyl-functional polysiloxane each X is -OH; when Formula 1 is a hydride-functional polysiloxane each X is -H; when Formula 1 is an alkoxysilane-functional polysiloxane each X is -OR and one or more R5 groups may additionally be an -OR group, where R is an alkyl or aryl group; when Formula 1 is a vinyl-functional polysiloxane, each X is a vinyl group ($-HC=CH_2$); when Formula 1 is an allyl-functional polysiloxane each X is an allyl group ($-CH_2-CH=CH_2$); when Formula 1 is a (meth)acrylate-functional polysiloxane each X is a (meth)acrylate group of the general formula ($-(CO)CR=CH_2$, where (CO) is a carbonyl group C=O, and R is an H or a methyl group); when Formula 1 is a non-functional polysiloxane, each X is an R5 group. As described above, in the case of functional polysiloxanes, in addition to the X groups, each R1, R2, R3, and R4 is independently selected from the group consisting of an alkyl group, an aryl group and a functional group, so these groups can also provide functionality. The X groups are frequently referred to as "terminal" groups and the R1, R2, R3, and R4 groups are referred to as "pendant" groups. For example, a wide variety of siloxanes with pendant ethylenically unsaturated groups are commercially available.

In some embodiments, R1 and R2 are alkyl groups and n is zero, i.e., the material is a poly(dialkylsiloxane). In some embodiments, the alkyl group is a methyl group, i.e., poly(dimethylsiloxane) ("PDMS"). In some embodiments, R1 is an alkyl group, R2 is an aryl group, and n is zero, i.e., the material is a poly(alkylarylsiloxane). In some embodiments, R1 is methyl group and R2 is a phenyl group, i.e., the material is poly(methylphenylsiloxane). In some embodiments, R1 and R2 are alkyl groups and R3 and R4 are aryl groups, i.e., the material is a poly(dialkyldiarylsiloxane). In some embodiments, R1 and R2 are methyl groups, and R3 and R4 are phenyl groups, i.e., the material is poly(dimethyldiphenylsiloxane). In some embodiments, the poly diorganosiloxane materials may be branched. For example, one or more of the R1, R2, R3, and/or R4 groups may be a linear or branched siloxane with alkyl or aryl (including halogenated alkyl or aryl) substituents and terminal R5 groups.

In some commercially available embodiments, R1, R2, R3, R4, and R5 are all methyl groups, making the material a polydimethyl siloxane or PDMS material. In other embodiments, at least some of the R1, R2, R3, and R4 are aryl groups.

Recently, gentle to skin adhesives have been described in US Patent Publication No. 2011/0212325 (Determan et al.) that can be prepared from non-functionalized polysiloxane materials. These materials are ones described by Formula 1 with X = R5, and ones described by Formula 1 where X = OH. The materials where X = OH are considered to be "Non-functionalized materials" in this reference because the hydroxyl groups are not used as "functional groups", that is to say that the polymerization reaction does not involve reaction with the hydroxyl groups. These "non-functional materials" have been found to polymerize upon exposure to electron beam or gamma radiation generate siloxane networks. In addition to the non-functionalized polysiloxane materials (i.e. those materials of Formula 1 where X = R5 or OH), the functionalized polysiloxane materials described above were also found to be polymerized in this way to

generate siloxane networks. In other words, this polymerization method was found to be very general and has the advantage of not requiring catalysts or initiators.

A wide variety of functionalized siloxanes are commercially available. Examples include not only terminal functionalized materials but also materials with pendant functional groups. Numerous examples of materials are commercially available from, for example, Gelest, Inc. Morrisville, PA, Dow Corning, Midland MI, and Wacker Chemie AG, Munich, Germany.

Many suitable silanol-terminated siloxane fluids are commercially available. Numerous examples of materials are commercially available from, for example, Gelest, Inc. Morrisville, PA, Dow Corning, Midland MI, and Wacker Chemie AG, Munich, Germany. Particularly suitable examples include the silanol terminated PDMS (polydimethyl siloxane), commercially available as XIAMETER OHX-4070, from Dow Corning, Midland, MI, and the hydroxyl functional PDMS commercially available as 350N from Wacker Chemie AG, Munich, Germany.

As used herein, "nonfunctional groups" are the same as defined in US Patent Publication No. 2011/0212325 (Determan et al.), namely either alkyl or aryl groups consisting of carbon, hydrogen, and in some embodiments, halogen (e.g., fluorine) atoms, or hydroxyl groups that are not involved with the polymerization reaction. As used herein, a "nonfunctionalized poly diorganosiloxane material" is one in which the R1, R2, R3, R4, R5, and X groups are nonfunctional groups.

While materials similar to those disclosed in US Patent Publication No. 2011/0212325 (Determan et al.), the materials disclosed therein are not generally useful in the present disclosure, as is shown in the Examples section below.

As is discussed in detail below, in many embodiments an electron beam, gamma ray radiation, or a combination thereof is used to form the crosslinked polymeric siloxane matrix. In some embodiments, another curing reaction as described above, has been carried out to form a polymeric layer and this polymeric layer is then crosslinked using an electron beam, gamma ray radiation, or a combination thereof. For example, a polymerized siloxane layer can be formed using a hydrosilylation reaction mechanism, and this siloxane layer can then be crosslinked using an electron beam, gamma ray radiation, or a combination thereof. In other embodiments, the crosslinked polymeric siloxane matrix is formed from a layer of nonfunctionalized polydiorganosiloxane materials which have not been polymerized. The nonfunctionalized polydiorganosiloxane materials are cured to crosslinked polymeric siloxane matrices by exposure to an electron beam (E-beam), gamma ray radiation, or a combination thereof. This process is described in greater detail below. One advantage of the use of nonfunctionalized poydiorganosiloxane materials to form the crosslinked polymeric matrix is that the unreacted or partially reacted nonfunctionalized polydiorganosiloxane materials that do not form the crosslinked polymeric matrix can become part of fluid component of the gel adhesive composition as described below.

Suitable nonfunctional polydiorgnanosiloxane materials include AK 60000, AK 200000, AK 300000, AK 500000, AK 1000000, EL polymer NA from Wacker Chemie AG, PMX-200 Silicone Fluids from Dow, TSF451-100M, Element14* PDMS 60k, Element14* PDMS 100k from Momentive, DMS-T25, DMS-T35, DMS-T72 from Gelest.

The polymeric fluid suitable for use in the gel adhesive compositions of the present disclosure are siloxane polymeric fluids described by Formula 1 of claim 1. As was mentioned above, as used herein the term fluid refers to materials that flow and incorporates both liquids and gums. In some embodiments, the siloxane polymeric fluid is a single siloxane polymeric fluid, in other embodiments the siloxane polymeric fluid is a blend of siloxane polymeric fluids. The siloxane polymeric fluids are generally non-functional. As mentioned above, in this disclosure, non-functional siloxane fluids are those that are described by Formula 1 below where the R1, R2, R3, R4, R5, and X groups are nonfunctional groups, where nonfunctional groups are either alkyl or aryl groups consisting of carbon, hydrogen, and in some embodiments, halogen (e.g., fluorine) atoms, or hydroxyl groups that are not involved with the polymerization reaction.

In some embodiments, the polymeric siloxane fluid is a silanol-terminated siloxane fluid. A wide variety of silanol-terminated siloxane fluids are suitable for use with the gel compositions of this disclosure. Generally, the silanol-terminated siloxane fluids are linear materials described by Formula 1 below:

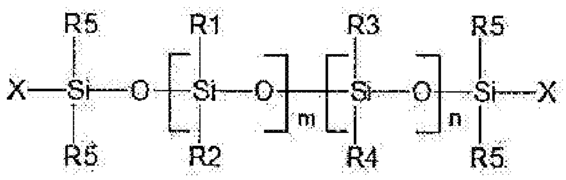

Formula 1

wherein R1, R2, R3, and R4 are independently selected from the group consisting of an alkyl group, an aryl group and a functional group, each R5 is an alkyl group, each X is a hydroxyl group, and n and m are integers, and at least one of

m or n is not zero. In some embodiments, one or more of the alkyl or aryl groups may contain a halogen substituent, e.g., fluorine. For example, in some embodiments, one or more of the alkyl groups may be $-CH_2CH_2C_4F_9$.

In other embodiments, each R5 is a methyl such that the poly diorganosiloxane material is terminated by dimethylsilanol groups. In some embodiments, R1 and R2 are alkyl groups and n is zero, i.e., the material is a poly(dialkylsiloxane). In some embodiments, the alkyl group is a methyl group, i.e., poly(dimethylsiloxane) ("PDMS"). In some embodiments, R1 is an alkyl group, R2 is an aryl group, and n is zero, i.e., the material is a poly(alkylarylsiloxane). In some embodiments, R1 is methyl group and R2 is a phenyl group, i.e., the material is poly(methylphenylsiloxane). In some embodiments, R1 and R2 are alkyl groups and R3 and R4 are aryl groups, i.e., the material is a poly(dialkyldiarylsiloxane). In some embodiments, R1 and R2 are methyl groups, and R3 and R4 are phenyl groups, i.e., the material is poly(dimethyldiphenylsiloxane).

In some commercially available embodiments, R1, R2, R3, R4, and R5 are all methyl groups, making the material a polydimethyl siloxane or PDMS material. In other embodiments, at least some of the R1, R2, R3, and R4 are aryl groups.

Many suitable silanol-terminated siloxane fluids are commercially available. Numerous examples of materials are commercially available from, for example, Gelest, Inc. Morrisville, PA, Dow Corning, Midland MI, and Wacker Chemie AG, Munich, Germany. Particularly suitable examples include the silanol terminated PDMS (polydimethyl siloxane), commercially available as XIAMETER OHX-4070, from Dow Corning, Midland, MI, and the hydroxyl functional PDMS commercially available as 350N from Wacker Chemie AG, Munich, Germany.

In other embodiments, the extractable fluid present in the gels of the present disclosure may be one or more unreactive siloxane fluids having the general structure shown in Formula 1A below:

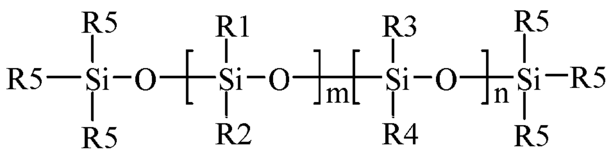

Formula 1A

wherein R1, R2, R3, and R4 are independently selected from the group consisting of an alkyl group, an aryl group and a functional group, each R5 is an alkyl group, and n and m are integers, and at least one of m or n is not zero. In some embodiments, one or more of the alkyl or aryl groups may contain a halogen substituent, e.g., fluorine. For example, in some embodiments, one or more of the alkyl groups may be $-CH_2CH_2C_4F_9$.

The unreactive siloxane fluid, as the term suggests, are siloxane fluids that do not participate in the curing reaction and are not incorporated into the formed crosslinked siloxane matrix.

The gels of this disclosure comprise at least 26% by weight of extractable siloxane fluid. As pointed out above, this extractable siloxane fluid typically is a silanol-terminated siloxane fluid, an unreactive siloxane fluid, or a combination thereof. The level of extractable siloxane fluid can be as high as 80% by weight. In some embodiments, the weight percentage of the extractable polymeric fluid comprises 30-60 weight % of the gel adhesive composition.

As mentioned above, the weight average molecular weight of the extractable siloxane fluid is greater than 275,000 grams/mole. In some embodiments, the weight average molecular weight of the extractable siloxane fluid is greater than 300,000 grams/mole. The weight percentage of the extractable polymeric fluid and the molecular weight of the extractable fluid refers to the fluid portion of the gel adhesive composition and does not include other, typically lower molecular weight components, that may also be extractable. For example, if siloxane tackifying resin is present in the gel adhesive composition, the siloxane tackifying resin is extractable, but this component is not included in the weight percentage or molecular weight description for the extractable polymeric fluid component of the gel adhesive composition.

In some embodiments, the extractable fluid is added to the crosslinked siloxane matrix of the adhesive gel compositions, in other embodiments, the crosslinked siloxane matrix is formed in whole or in part in the presence of the extractable fluid. The use of E-beam or gamma ray radiation to form the crosslinked siloxane matrix is particularly useful. An extractable siloxane fluid, which may contain a partially polymerized adhesive composition or may comprise just the extractable siloxane fluid, can be crosslinked with E-beam or gamma ray radiation to form the crosslinked siloxane matrix. The extractable siloxane fluid can thus be non-reactive, that is to say the siloxane fluid does not contain functional groups that crosslink to form the crosslinked siloxane matrix. In this disclosure, nonreactive siloxane fluids include hydroxyl-functional as well as non-functional siloxane fluids.

Examples of suitable extractable siloxane fluids include those described above as suitable nonfunctional siloxanes synthons for forming the crosslinked polymeric siloxane matrix.

If included, generally, any known tackifying resin may be used, e.g., in some embodiments, siloxane tackifying

resins may be used. Siloxane tackifying resins have in the past been referred to as "silicate" tackifying resins, but that nomenclature has been replaced with the term "siloxane tackifying resin". The siloxane tackifying resins are added in sufficient quantity to achieve the desired tackiness and level of adhesion. In some embodiments, a plurality of siloxane tackifying resins can be used to achieve desired performance.

Suitable siloxane tackifying resins include those resins composed of the following structural units M (i.e., monovalent $R'_3SiO_{1/2}$ units), D (i.e., divalent $R'_2SiO_{2/2}$ units), T (i.e., trivalent $R'SiO_{3/2}$ units), and Q (i.e., quaternary $SiO_{4/2}$ units), and combinations thereof. Typical exemplary siloxane resins include MQ siloxane tackifying resins, MQD siloxane tackifying resins, and MQT siloxane tackifying resins. These siloxane tackifying resins usually have a number average molecular weight in the range of 100 to 50,000- gm/mole, e.g., 500 to 15,000 gm/mole and generally R' groups are methyl groups.

MQ siloxane tackifying resins are copolymeric resins where each M unit is bonded to a Q unit, and each Q unit is bonded to at least one other Q unit. Some of the Q units are bonded to only other Q units. However, some Q units are bonded to hydroxyl radicals resulting in $HOSiO_{3/2}$ units (i.e., "$T^{OH}$" units), thereby accounting for some silicon-bonded hydroxyl content of the siloxane tackifying resin.

The level of silicon bonded hydroxyl groups (i.e., silanol) on the MQ resin may be reduced to no greater than 1.5 weight percent, no greater than 1.2 weight percent, no greater than 1.0 weight percent, or no greater than 0.8 weight percent based on the weight of the silicate tackifying resin. This may be accomplished, for example, by reacting hexamethyldisilazane with the siloxane tackifying resin. Such a reaction may be catalyzed, for example, with trifluoroacetic acid. Alternatively, trimethylchlorosilane or trimethylsilylacetamide may be reacted with the siloxane tackifying resin, a catalyst not being necessary in this case.

MQD siloxane tackifying resins are terpolymers having M, Q and D units. In some embodiments, some of the methyl R' groups of the D units can be replaced with vinyl (CH2=CH-) groups ("$D^{Vi}$" units). MQT silicate tackifying resins are terpolymers having M, Q and T units.

Suitable siloxane tackifying resins are commercially available from sources such as Dow Corning (e.g., MQ-1600. MQ-1640), Momentive Performance Materials (e.g., SR545 and SR1000), and Wacker Chemie AG (e.g., BELSIL TMS-803).

It should be noted that siloxane tackifying resins do not become incorporated into the crosslinked polymeric siloxane matrix, and therefore if the gel adhesive composition contains siloxane tackifying resin, upon extraction the siloxane tackifying resin typically is extracted along with the polymeric fluid. However, the values for weight percentages of extractable fluid as well as the molecular weights of the extractable fluid do not include the siloxane tackifying resin. Typically the siloxane tackifying resin is detectable separately from the polymeric fluid, and thus the values for extractable fluid does not include the siloxane tackifying resin.

Also disclosed herein are adhesive articles. The adhesive articles comprise a substrate with a first major surface and a second major surface, and a gel adhesive composition disposed on at least a portion of the first major surface of the substrate. The gel adhesive composition comprises a crosslinked polymeric siloxane matrix, and a polymeric fluid with a weight average molecular weight greater than 275,000 grams/mole, wherein the polymeric fluid is extractable, the weight percentage of the extractable polymeric fluid comprises 26-80 weight % of the gel adhesive composition, and the polymeric fluid is a siloxane polymeric fluid described by Formula 1 of claim 7. These gel adhesive compositions are described in detail above.

In these embodiments, of the gel adhesive articles, the gel adhesive composition may further comprise one or more siloxane tackifying resin. Typically the siloxane tackifying resins are MQ tackifying resins as described above.

The polymeric fluid is a siloxane fluid. In many embodiments the siloxane fluid comprises a non-functional siloxane fluid or a combination of non-functional siloxane fluids as described above. In some embodiments of these gel adhesive articles, the weight average molecular weight of the polymeric fluid is greater than 300,000 grams/mole. In some embodiments, the weight percentage of the extractable polymeric fluid comprises 30-60 weight % of the gel adhesive composition.

As mentioned above, one of the goals of the gel adhesive compositions is high adhesion with low skin trauma. The properties of the adhesive articles can be measured in a variety of ways. Adhesion to skin can be difficult to measure for a variety of reasons since there is a wide range of skin types, so human skin is not a standard substrate surface as is for example a glass plate, stainless steel plate or polymeric plate. Additionally, conducting adhesion tests on human skin requires the use of panels of volunteers. This makes testing expensive and complicated. Additionally, while adhesion to human skin is a desired result, adhesive articles such as medical adhesive articles frequently are called upon to adhere to a wide range of substrates such as tubing, drapes, and the like. Thus, while adhesion to skin is one feature measured for articles of this disclosure, other testing protocols are also carried out to characterize the adhesive articles. Among the desired features for the gel adhesive articles of this this disclosure is to have a 180° Peel Adhesion value to stainless steel of at least 10.0 Newtons/decimeter when measured according to the testing procedures described in the Examples section. Another desirable feature for the gel adhesive articles of this disclosure is to have a Skin Peel Adhesion value of greater than 100 grams/inch according to the testing procedures described in the Examples section. In some

embodiments the Skin Peel Adhesion value is greater than 150 grams/inch or even greater than 200 grams/inch.

The lack of skin trauma can be measured using a BCA assay (bicinchoninic acid assay) test which measure the amount of protein in a solution as is described in the Examples section. In some embodiments the BCA value is 10 micrograms per milliliter or less. In other embodiments, the BCA value is 8 micrograms per milliliter or less, or even 5 micrograms per milliliter or less.

A wide variety of substrates are suitable for the articles of this disclosure. In many embodiments, the substrate comprises a substrate suitable for use in a medical article. Examples of suitable substrates include a polymeric film, a fabric, a non-woven, a foam, a paper, a mesh, an adhesive, or a release liner. In some embodiments, the breathable conformable backing comprises a high moisture vapor permeable film backings. Examples of such backings, methods of making such films, and methods for testing their permeability are described, for example, in US Patent Nos. 3,645,835 and 4,595,001.

Generally the backing is conformable to anatomical surfaces. As such, when the backing is applied to an anatomical surface, it conforms to the surface even when the surface is moved. Generally, the backing is also conformable to animal anatomical joints. When the joint is flexed and then returned to its unflexed position, the backing stretches to accommodate the flexion of the joint, but is resilient enough to continue to conform to the joint when the joint is returned to its unflexed condition.

Examples of particularly suitable backings can be found in US Patent Nos. 5,088,483 and 5,160,315, and include elastomeric polyurethane, polyester, or polyether block amide films. These films have a combination of desirable properties including resiliency, high moisture vapor permeability, and transparency.

A combination of substrate layers can also be used. For example, a backing substrate can used in conjunction with a release liner, such that one surface of the gel adhesive is in contact with the backing substrate, and the other is contact with a release liner. Other combinations can also be used.

In some embodiments, it may be desirable for there to be a primer layer between the substrate surface and the gel adhesive layer. Generally, the primer layer comprises materials that are commonly referred to as "primers" or "adhesion promoters". Primers and adhesion promoters are materials that are applied as thin coatings on a surface and strongly adhere to the surface and provide a modified surface chemistry to the surface. Examples of suitable coating materials include polyamides, poly(meth)acrylates, chlorinated polyolefins, rubbers, chlorinated rubbers, polyurethanes, siloxanes, silanes, polyester, epoxies, polycarbodiimides, phenolics, and combinations thereof.

The primer layer may be applied to the substrate as a solventborne mixture, a waterborne mixture, or as a 100% solids composition. Typically the primer layer is applied as a solventborne or a waterborne mixture.

Examples of suitable commercially available primer layer materials include: the polyamide UNI-REZ available from Arizona Chemical; the polyacrylate RHOPLEX from Dow Chemical; the chlorinated polyolefins such as EASTMAN CP-343 available from Eastman Chemical, or SUPERCHLON from Nippon Paper Chemicals; the synthetic rubber KRATON materials available from Kraton Polymers; the polyurethane NEO-REZ available from DSM; the siloxanes described in US Patent No. 5,866,222 (Seth et al.) and pending US Patent Application Serial No. 61/579115 filed on December 22, 2011, titled "Adhesive Article Including Primer Layer and Method of Making the Same"; the SILQUEST silane materials available from Momentive; the polyester EASTMAN AQ resins available from Eastman Chemical; the epoxy DER materials available from Dow Chemical; the polycarbodiimides described in US Patent 4,060,664; and the phenolic BKS resins from Georgia-Pacific.

In some embodiments, the primer layer composition comprises a film-forming resin and may additionally contain a wide variety of additional additives. The selection of the film forming resin or resins is affected by an array of properties including solubility of the resin, and the molecular weight and Tg of the polymer of polymers in the resin.

Various film-forming resins are known. Representative film-forming resins include acrylic resin(s), polyvinyl resin(s), polyester(s), polyacrylate(s), polyurethane(s) and mixtures thereof. Polyester resins include copolyester resins commercially available from Bostik Inc., Middleton, Mass. under the trade designation "VITEL 2300BG"; copolyester resins available from Eastman Chemical, Kingsport, Tenn. under the trade designation "EASTAR"; copolyester resins from DSM, Heerlen, the Netherlands, under the trade designation "ARNITEL"; as well as other polyester resins available from Bayer, Pittsburg, Pa. under the trade designations "MULTRON" and "DESMOPHEN"; Spectrum Alkyd & Resins Ltd., Mumbia, Maharshtra, India under the trade designation "SPECTRAALKYD" and Akzo Nobel, Chicago, Ill. under the trade designation "SETALIN" alkyd.

Solvent-based primer compositions comprise the base polymer admixed with a solvent. The solvent may be a single solvent or a blend of solvents. The solvent-based primer composition generally contains about 5 to about 60 parts by weight of the base polymer, more typically about 10 to about 40 parts base polymer or even about 10 to about 30 parts base polymer, with the remainder of the primer composition being solvent and optional additives.

Among the particularly suitable film forming resins are silicone copolymers such as those described in US Patent No. 9,890,302 (Tse et al.). Acrylic resins, polyvinyl resins and mixtures thereof are also suitable. Various acrylic resins are known. In general, acrylic resins are prepared from various (meth)acrylate monomers such as polymethylmethacrylate (PMMA), methyl methacrylate (MMA), ethyl acrylate (EA), butyl acrylate(BA), butyl methacrylate (BMA),

n-butyl methacrylate (n-BMA) isobutylmethacrylate (IBMA), polyethylmethacrylate (PEMA), etc. alone or in combination with each other. Exemplary acrylic resins include those commercially available from Rohm and Haas, Co., Philadelphia, Pa. under the trade designation "PARALOID" and from Ineos Acrylics, Cordova, Tenn. under the trade designation "ELVACITE" resins. Other suitable polyacrylic materials include those from S. C. Johnson, Racine, Wis. under the trade designation "JONCRYL" acrylics. Polyvinyl resins include vinyl chloride/vinyl acetate copolymers, such as available from Rohm and Haas, Co., Philadelphia, Pa. under the trade designation "ACRYLOID" and from available from Union Carbide Corp., a subsidiary of The Dow Chemical Company ("Dow"), Midland Mich. under the trade designation "VYHH" as well as vinyl chloride/vinyl acetate/vinyl alcohol terpolymers also commercially available from Union Carbide Corp. under the trade designation "UCAR VAGH". Other polyvinyl chloride resins are available from Occidental Chemical, Los Angeles, Calif.; BF Goodrich Performance Materials, Cleveland, Ohio; and BASF, Mount Olive, NJ. In some embodiments, UV cured (meth)acrylate coatings may also be used as a primer coating as described in PCT Publication No. WO 2016/100,021 (Kluge et al.).

Suitable water-based primers are generally emulsions or dispersions that are substantially free of water soluble base polymers as a major component. Water-based emulsions and dispersions are advantageous to reduce solvent emissions by employing primer compositions that are substantially free of volatile organic solvents. An exemplary water-based primer includes a crosslinked poly(meth)acrylate polymer such as a butyl acrylate/methyl methacrylate copolymer crosslinked with a sulfo-urethane-silanol polymer.

In some embodiments, it may be desirable that the second major surface of the substrate, that is to say the surface on which the gel adhesive is not coated, have a low adhesion coating. This is especially true if the gel adhesive article is to be supplied in the form of a tape. Many tapes are supplied as rolls, where the adhesive layer contacts the non-adhesive "back" side of the backing upon being rolled up. Often this non-adhesive surface of the backing has a low adhesion or release coating on it to permit the roll to be unwound. These low adhesion coatings are often called "low adhesion backsizes" or LABs. Many factors control whether an LAB coating is necessary or desirable, including the nature of the adhesive, the composition and topography of the backing, and the desired use for the tape article. For example, some polyolefinic backings have a sufficiently low surface energy that an LAB coating is not required when used with some classes of pressure sensitive adhesives.

LAB coatings are widely used in the adhesive arts. Typically the use of LABs have proven useful, especially in tape applications. For some tape uses, the presence of LABs can be detrimental. For example, masking tapes are often used to mask areas to be painted. Upon completion of the painting, the masking tape is removed. In some instances, when LAB coatings are used on the masking tape, the paint does not adhere well to the LAB coated surface and can run or flake off to contaminate the painted surface.

Similarly, a variety of tapes are designed to wrap upon themselves in use. Examples of these types of tapes are athletic tapes, duct tapes, electrical tapes, as well as a variety of medical tapes. With these tapes, the LAB coating must provide sufficiently easy release to permit facile unwinding of the tape, and yet must adhere sufficiently strongly to the adhesive to permit the tape to wrapped upon itself and retain the adhesion throughout the period of use of the tape.

The gel adhesive articles are disposed on a substrate, and the article may also include another substrate. The second substrate may be any of the substrates described above. For example, one major surface of the gel adhesive layer may be disposed on a substrate that is a tape backing, and the other major surface of the gel adhesive may be in contact with a release layer. In this way the release layer protects the adhesive layer until it is to be used. In other embodiments, the gel adhesive layer may be in contact with two release liners. This type of free-standing adhesive layer is typically referred to as a "transfer tape". Transfer tapes can be used to prepare a wide range of adhesive articles. For example, one release liner can be removed and the exposed adhesive surface laminated to a substrate to form a wide range of adhesive articles.

The gel adhesive may be of any suitable thickness, from quite thin to quite thick. In some embodiments, the thickness will be at least 10 micrometers (0.5 mil), up to 305 micrometers (12 mils), and in some embodiments the thickness will be from 25 micrometers (1 mil) up to 152 micrometers (6 mils), or even from 25 micrometers (1 mil) up to 102 micrometers (4 mils) thick. A wide range of intermediate thicknesses are also suitable.

The gel adhesive layer may be a continuous layer, or it may be a discontinuous layer. For example, the gel adhesive layer may be stripe coated such that stripes of gel adhesive are present on the first major surface of the substrate. In other embodiments, the gel adhesive may have through holes. Through holes are holes that pass through the entire thickness of the adhesive layer.

In other embodiments, the adhesive articles comprise a substrate with a first major surface and a second major surface, and a gel adhesive composition disposed on at least a portion of the first major surface of the substrate, at a thickness of from 25 micrometers to 102 micrometers (1-4 mils). In these embodiments, the gel adhesive composition comprises a crosslinked polymeric siloxane matrix, a polymeric fluid, wherein the polymeric fluid is extractable, and the weight percentage of the extractable polymeric fluid comprises 26-80 weight % of the gel adhesive composition, and at least one siloxane tackifying resin. The gel adhesive article has a 180° Peel Adhesion value to stainless steel of at least 10.0 Newtons/decimeter, and a Skin Peel Adhesion value of greater than 100 grams/inch. In some embodiments the

Skin Peel Adhesion value is greater than 150 grams/inch or even greater than 200 grams/inch.

In these embodiments, of the gel adhesive articles, the gel adhesive composition may further comprise one or more siloxane tackifying resin. Typically the siloxane tackifying resins are MQ tackifying resins as described above.

In some of these embodiments, the extractable polymeric fluid comprises a mixture of polymeric siloxane fluids. A wide range of polymeric siloxane fluids are suitable as described above. In some embodiments where the extractable polymeric fluid comprises a mixture of polymeric siloxane fluids, at least one of polymeric siloxane fluids has a weight average molecular weight greater than 275,000 grams/mole. Typically, the polymeric fluid comprises a non-functional siloxane fluid or a combination of non-functional siloxane fluids as described above. In some embodiments, the weight percentage of the extractable polymeric fluid comprises 30-60 weight % of the gel adhesive composition.

The lack of skin trauma can be measured using a BCA assay (bicinchoninic acid assay) test which measure the amount of protein in a solution as is described in the Examples section. In some embodiments the BCA value is 10 micrograms per milliliter or less. In other embodiments, the BCA value is 8 micrograms per milliliter or less, or even 5 micrograms per milliliter or less.

A wide variety of substrates are suitable for these embodiments of articles of this disclosure. In many embodiments, the substrate comprises a substrate suitable for use in a medical article. Examples of suitable substrates include a polymeric film, a fabric, a non-woven, a foam, a paper, a mesh, an adhesive, or a release liner. These substrates have been described above. The articles may also comprise more than one substrate, as is described above.

In some embodiments, it may be desirable for there to be a primer layer between the substrate surface and the gel adhesive layer. Generally, the primer layer comprises materials that are commonly referred to as "primers" or "adhesion promoters". Primers and adhesion promoters are described above

In some embodiments, it may be desirable that the second major surface of the substrate, that is to say the surface on which the gel adhesive is not coated, have a low adhesion coating, as is described above.

As mentioned above, the gel adhesive has a thickness of from 25 micrometers (1 mil) up to 102 micrometers (4 mils) thick. A wide range of intermediate thicknesses are also suitable.

The gel adhesive layer may be a continuous layer, or it may be a discontinuous layer. For example, the gel adhesive layer may be stripe coated such that stripes of gel adhesive are present on the first major surface of the substrate. In other embodiments, the gel adhesive may have through holes. Through holes are holes that pass through the entire thickness of the adhesive layer.

Also disclosed are methods for preparing gel adhesive articles. In some embodiments, the method comprises providing a substrate with a first major surface and a second major surface, providing a gel adhesive composition, and disposing the gel adhesive composition on at least a portion of the first major surface of the substrate. The gel adhesive composition comprises a crosslinked polymeric siloxane matrix, and a polymeric fluid with a weight average molecular weight greater than 275,000 grams/mole, wherein the polymeric fluid is extractable, and wherein the weight percentage of the extractable polymeric fluid comprises 26-80 weight % of the gel adhesive composition. The gel adhesive may further comprise at least one siloxane tackifying resin. The gel adhesive compositions are described in detail above.

Providing a gel adhesive composition comprises preparing a precursor mixture containing one or more siloxane fluid and may also include other additives. The precursor mixture may be a reactive mixture, meaning that the mixture includes one or more siloxanes with reactive groups. Reactive groups in this context, as has been discussed above, refers to functional groups that participate in a polymerization reaction. The precursor mixture can be further processed in a wide variety of ways to form the crosslinked polymeric siloxane matrix of the gel adhesive composition. This precursor mixture can be disposed onto the substrate surface and then cured, or, if the precursor mixture is a reactive mixture, the reaction mixture can be cured and then disposed on the substrate surface to form a siloxane layer that can then be crosslinked.

As was mentioned above, the crosslinked polymeric siloxane matrix can be formed in a variety of ways by curing and/or crosslinking of precursor materials. The choice of precursor materials depends upon the curing reactions to be carried out. Suitable curing mechanisms include thermal curing, radiation curing, condensation curing, or a combination thereof.

As was mentioned above, thermal curing can be carried out in a variety of ways. The thermally curable mixture includes at least one thermally curable siloxane, optionally at least one thermally curable crosslinker, at least one non-reactive siloxane fluid, and at least one thermal catalyst. Again, as was mentioned above, the thermally curable siloxane can be a functional siloxane: typically an ethylenically unsaturated siloxane (for curing with vinyl specific peroxides) or a combination of ethylenically unsaturated and silicon-hydride (Si-H) groups (for silylation curing); or a non-functional siloxane (for curing with peroxides). The thermal catalyst can thus be a peroxide or a silylation catalyst such as a platinum or palladium catalyst.

Radiation curing can also be effected in a variety of ways. If ethylenically unsaturated groups are present on the precursor siloxane (such as (meth)acrylate groups), and a photoinitiator is present, the siloxane precursor can be cured by exposure to UV light. If the precursor siloxane is non-functional, the curing can be effected by exposure to an electron beam or gamma ray radiation. This curing mechanism is particularly useful and flexible for forming gel adhesives

and is discussed in greater detail below.

Condensation curing is another option for curing the siloxane precursor, if the siloxane precursor contains alkoxy, aryloxy, or hydroxyl groups. Generally the condensation curing reaction requires the presence of a curing catalyst, and frequently requires the application of heat to effect complete curing. Because terminal hydroxyl groups on the siloxane fluids used in this disclosure do not readily engage in condensation reactions, these materials are generally considered to be "non-functional siloxanes", so condensation curing is a non-preferred curing mechanism.

As was discussed above, in some of the embodiments that use curing mechanisms other than electron beam or gamma ray radiation curing, the method further comprises electron beam or gamma ray radiation curing to crosslink the cured reaction mixture. Thus, for example, if the precursor mixture is thermally cured, the thermally cured siloxane layer can be exposed to electron beam or gamma ray radiation curing to crosslink the cured siloxane layer or to increase the crosslink density of the cured siloxane layer.

Thermal and radiation curing and combinations thereof are particularly suitable methods of curing in this disclosure. Examples of thermal curing include peroxide curing and hydrosilylation. In peroxide curing, a peroxide initiator is added to a siloxane composition. Upon heating, the peroxide decomposes to form radicals which react with siloxane to form polymeric radicals. The polymeric radicals combine to form crosslinks. A wide variety of peroxides have been found to be suitable, such as di-acyl peroxides and peroxy esters. If the siloxane contains vinyl groups, the crosslinking reaction is generally much more facile and a class of peroxides called "vinyl specific peroxides" can be used to crosslink these materials. Examples of vinyl specific peroxides include di-aralkyl peroxides. alkyl-aralkyl peroxides, and di-alkyl peroxides. Thus, peroxide curing can be achieved either with non-functional siloxane materials or vinyl-functional siloxane materials.

Hydrosilylation, also called catalytic hydrosilation, describes the addition of Si-H bonds across unsaturated bonds. When hydrosilylation is used for curing, typically both the Si-H and unsaturated bonds are present on siloxane molecules, either the same molecule or on different molecules. The hydrosilylation reaction is typically catalyzed by a platinum catalyst, and generally heat is applied to effect the curing reaction. In this reaction, the Si-H adds across the double bond to form new C-H and Si-C bonds. This process in described, for example, in PCT Publication No. WO 2000/068336 (Ko et al.), and PCT Publication Nos. WO 2004/111151 and WO 2006/003853 (Nakamura).

In these embodiments, the thermal curing reaction may produce a crosslinked polymeric siloxane matrix or it may generate a polymeric siloxane layer that is crosslinked by exposure to an electron beam or gamma ray radiation. In these embodiments, the curing reaction can be a single step (thermal curing) or two steps (thermal curing followed by electron beam or gamma ray exposure).

In other embodiments, providing a gel adhesive comprises preparing a gel adhesive precursor mixture and electron beam or gamma ray radiation curing the precursor mixture. Typically, electron beam curing is a more convenient curing method. In these embodiments, the precursor mixture comprises at least one non-reactive siloxane fluid. As mentioned above, in this context, non-reactive siloxane fluids include both silanol-terminated siloxane fluids as well as polydiorganosiloxane fluids. Generally, suitable siloxane fluids are linear materials described by Formula 1 below:

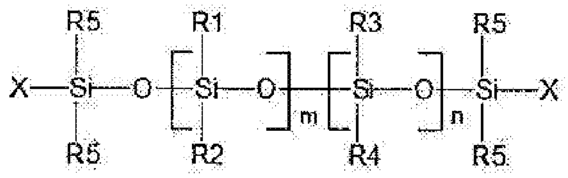

Formula 1

wherein R1, R2, R3, and R4 are independently selected from the group consisting of an alkyl group, or an aryl group, each R5 is an alkyl group, each X is a hydroxyl group or an R5 group, and n and m are integers, and at least one of m or n is not zero. In some embodiments, one or more of the alkyl or aryl groups may contain a halogen substituent, e.g., fluorine. For example, in some embodiments, one or more of the alkyl groups may be $-CH_2CH_2C_4F_9$. These materials are described in detail above.

The methods of this disclosure have a great deal of flexibility, in that a wide variety of materials can be used and the sequences to prepare the articles of this disclosure can be carried out in a variety of different ways. For example, if thermal curing is used, the thermally cured material can be prepared and then disposed on the substrate surface, or the thermally curable material can be disposed on the substrate surface and then thermally cured. Additionally, if the thermally curable is not crosslinked or is very lightly crosslinked, the siloxane layer can be crosslinked or further crosslinked by exposure to an electron beam or gamma ray radiation.

In many embodiments, a non-functional siloxane precursor fluid, is used to form the crosslinked siloxane matrix. The non-functional siloxane precursor fluid can be disposed on a substrate surface and then be crosslinked by exposure to an electron beam or gamma ray radiation. In this way the same material is used to generate the crosslinked siloxane matrix and the material that does not become incorporated into the crosslinked siloxane matrix comprises the extractable polymeric fluid. Also any additional additives, such as siloxane tackifying resins, can be added to the non-functional siloxane fluid prior to disposal on a substrate surface and thus is distributed throughout the mixture prior to the crosslinking. This not only provides for effective dispersal throughout the precursor mixture, it also much simpler to add the additives to the fluid than to the crosslinked gel.

In this method, the level of crosslinking can be controlled by controlling the exposure of the precursor fluid layer to an electron beam or gamma ray radiation. While not wishing to be bound by theory, it is believed that a less highly crosslinked siloxane matrix aids in the formation of a gel adhesive with the balance of high adhesion and low skin trauma.

Regardless of whether the siloxane material disposed on the surface of a substrate is thermally curable mixture, a thermally cured but not crosslinked mixture, or a non-functional siloxane fluid, the methods of disposal onto the surface of a substrate are similar. The siloxane material, the tackifying resin, if present, and any optional additives may be combined by any of a wide variety of known means prior to being coated and cured. For example, in some embodiments, the various components may be pre-blended using common equipment such as mixers, blenders, mills, and extruders.

Once the siloxane mixture is disposed on a surface, one or more curing reactions can be carried out. Thermal curing can be effected by exposing the curable siloxane mixture to an elevated temperature to initiate polymerization. This elevated temperature is generally provided through the use of an oven, such as a forced air oven. The time that the curable siloxane mixture is exposed to the elevated temperature varies depending upon a variety of factors such as the viscosity of the reactive siloxanes and the thermal initiator or catalyst used.

If radiation curing is carried out, the siloxane layer is exposed to UV, E-beam or gamma ray radiation. If UV radiation is used, an appropriate initiator is present in the siloxane layer. The UV radiation activates the initiator and free radical polymerization of the free radically polymerizable functional groups in the siloxane layer occurs. When E-beam or gamma ray radiation is used, no initiator is needed and the siloxane layer is non-functional.

Regardless of how it is formed, the siloxane layer may be crosslinked by exposure to E-beam or gamma ray radiation. In some embodiments, a combination of electron beam curing and gamma ray curing may be used. A variety of procedures for E-beam and gamma ray curing are well-known. The cure depends on the specific equipment used, and those skilled in the art can define a dose calibration model for the specific equipment, geometry, and line speed, as well as other well understood process parameters

Commercially available electron beam generating equipment is readily available. For the examples described herein, the radiation processing was performed on a Model CB-300 electron beam generating apparatus (available from Energy Sciences, Inc. (Wilmington, MA). Generally, a support film (e.g., polyester terephthalate support film) runs through a chamber. Generally, the chamber is inerted (e.g., the oxygen-containing room air is replaced with an inert gas, e.g., nitrogen) while the samples are e-beam cured.

Commercially available gamma irradiation equipment includes equipment often used for gamma irradiation sterilization of products for medical applications. In some embodiments, such equipment may be used to cure, or partially cure the gentle to skin adhesives of the present disclosure. In some embodiments, such curing may occur simultaneously with a sterilization process for a semi-finished or finished product, for example a tape or wound dressing.

## Examples

These examples are merely for illustrative purposes only and are not meant to be limiting on the scope of the appended claims. All parts, percentages, ratios, etc. in the examples and the rest of the specification are by weight, unless noted otherwise. Solvents and other reagents used were obtained from Sigma-Aldrich Chemical Company; Milwaukee, Wisconsin unless otherwise noted. The following abbreviations are used: cm = centimeters; mm = millimeters; g = grams; kg = kilograms; lb = pounds; sec = seconds; min = minutes; pph = parts per hundred; Mrad = megarads. The terms "weight %", "% by weight", and "wt%" are used interchangeably.

**Table of Abbreviations**

| Abbreviation | Description |
|---|---|
| MQ Resin | An MQ silicate resin available from Wacker (Adrian, MI) under the trade designation MQ-RESIN POWDER 803 TF |
| DMS-T25 | Trimethylsiloxy-terminated PDMS fluid with a viscosity of approximately 500 cSt available from Gelest (Morrisville, PA) |

(continued)

| Abbreviation | Description |
|---|---|
| DMS-T35 | Trimethylsiloxy-terminated PDMS fluid with a viscosity of approximately 5,000 cSt available from Gelest (Morrisville, PA) |
| PMX-200 | Trimethylsiloxy-terminated PDMS fluid with a viscosity of approximately 5,000 cSt available from Dow Corning (Midland, MI) under the trade designation XIAMETER PMX-200 SILICONE FLUID. |
| DMS-T43 | Trimethylsiloxy-terminated PDMS fluid with a viscosity of approximately 30,000 cSt available from Gelest (Morrisville, PA) |
| OHX-4070 | Silanol terminated PDMS fluid with viscosity of 50,000 cSt available from Dow Corning (Midland, MI) under the trade designation XIAMETER OHX-4070 Polymer 50000CS |
| ELEMENT 14 | A linear PDMS with a viscosity of approximately 60,000 cSt available from Momentive Performance Materials US) under the trade designation ELEMENT 14* PDMS 60K |
| AK60K | A linear non-reactive PDMS with a viscosity of approximately 60,000 cSt available from Wacker (Adrian, MI) under the trade designation AK 60000 SILICONE FLUID |
| 350N | Hydroxy-functional PDMS with a viscosity of 300,000 cP available from Wacker (Adrian, MI) under the trade designation ELASTOMER 350 N |
| AK200K | A linear non-reactive PDMS with a viscosity of approximately 200,000 cSt available from Wacker (Adrian, MI) under the trade designation AK 200000 SILICONE FLUID |
| AK300K | A linear non-reactive PDMS with a viscosity of approximately 300,000 cSt available from Wacker (Adrian, MI) under the trade designation AK 300000 SILICONE FLUID |
| AK500K | A linear non-reactive PDMS with a viscosity of approximately 500,000 cSt available from Wacker (Adrian, MI) under the trade designation AK 500000 SILICONE FLUID |
| AK1000K | A linear non-reactive PDMS with a viscosity of approximately 1,000,000 cSt available from Wacker (Adrian, MI) under the trade designation AK 1000000 SILICONE FLUID |
| TSF451-100M | Trimethylsiloxy-terminated PDMS fluid with a viscosity of approximately 1,000,000 cSt available from Momentive Performance Materials (Japan) |
| DMS-T72 | Trimethylsiloxy-terminated PDMS fluid with a viscosity of approximately 20,000,000 cSt available from Gelest (Morrisville, PA) |
| EL Polymer NA | Highly viscous nonfunctional PDMS gum available from Wacker (Adrian, MI) with a viscosity of approximately 10,000,000 cSt |
| DMS-V52 | Vinyl-terminated PDMS with a viscosity of 165,000 cSt available from Gelest (Morrisville, PA) |
| DMS-H21 | Hydride-terminated PDMS with a viscosity of 100 cSt available from Gelest (Morrisville, PA) |
| HMS-993 | Trimethylsiloxy-terminated polymethylhydrosiloxane with a viscosity of 30-45 cSt available from Gelest (Morrisville, PA) |
| Pt Catalyst | Platinum catalyst solution (platinum - divinyltetramethyldisiloxane complex), 150-200 ppm, available as SIP6830.3 from Gelest (Morrisville, PA) |
| EX100 | A two-component high elongation silicone elastomer (Part A base with a viscosity of 12,000-14,000 cSt and Part B activator with a viscosity of 800-1,000 cSt), available under the trade designation EXSII, 100 from Gelest (Morrisville, PA) |
| B-15 | Acrylic resin as fabric binder from Dow Chemical (Midland, MI) |
| Backing 1 | A backing film was provided by extruding a thermoplastic polyester elastomer onto a nonwoven polyester material, wherein the elastomer material had a three second Shore D hardness of 32 as tested per ISO 868 and a melting temperature of approximately 212 °C. The backing had a total thickness of 0.0047 inches (119 micrometers). |

(continued)

| Abbreviation | Description |
|---|---|
| Backing 2 | A woven fabric from Milliken with pick count of 60 X 48 40D PET X 150 D Cellulose Acetate, as described in US 8,221,863, was . saturated with B-15 Acrylic resin and was provided by extruding a thermoplastic polyester elastomer wherein the elastomer material had a three second Shore D hardness of 32 as tested per ISO 868 and a melting temperature of approximately 212°C. |
| Release Liner 1 | Release liner available from 3M Co. (St. Paul, MN) under the trade designation 3M SCOTCHPAK 9741 RELEASE LINER |
| Commercial Tape A | A medical tape with a silicone adhesive available from 3M Co. (St. Paul, MN) under the trade designation 3M KIND REMOVAL SILICONE TAPE |
| Commercial Tape B | A foam-containing medical dressing with a silicone adhesive available from Medline (Mundelein, IL) under the trade designation OPTIVA GENTLE |
| Commercial Tape C | A medical tape with a silicone adhesive available from Molnlycke Health Care (Norcross, GA) under the trade designation MEPITAC SOFT SILICONE TAPE |
| Commercial Tape D | A foam-containing medical dressing with a silicone adhesive available from Smith & Nephew (London, UK) under the trade designation ALLEVYN LIFE |
| Commercial Tape E | A foam-containing medical dressing with a silicone adhesive available from Smith & Nephew (London, UK) under the trade designation ALLEVYN GENTLE BORDER LITE |
| Commercial Tape F | A foam-containing medical dressing with a silicone adhesive available from Coloplast (Minneapolis, MN) under the trade designation BIATAIN SILICONE |
| Commercial Tape G | A medical tape with an acrylate adhesive available from 3M Co. (St. Paul, MN) under the trade designation 3M MICROPORE SURGICAL TAPE |
| Commercial Tape H | A medical tape with an acrylate adhesive available from 3M Co. (St. Paul, MN) under the trade designation 3M DURAPORE SURGICAL TAPE |
| Commercial Tape I | A medical tape with an acrylate adhesive available from 3M Co. (St. Paul, MN) under the trade designation 3M MULTIPORE DRY SURGICAL TAPE |

## Test Methods

### Tack

Tack was measured using a TA-XT Plus Texture Analyzer (Stable Micro Systems Ltd., Surrey, UK) equipped with a 6 mm diameter polypropylene cylinder probe. A tape test specimen was slit to a width of 1.9 centimeters (0.75 inches) and length of 10.2 centimeters (4 inches) and laminated to a brass bar with 10 millimeter diameter holes through it to allow for the probe to reach the adhesive face of the tape. Test parameters were: Pretest: 0.5 millimeters/second, test speed: 1.0 millimeters/second, pretest speed: 10.0 millimeters/second, applied force: 100 grams, contact time: 5 seconds, trigger force: 1 gram, and withdraw distance: 3 millimeters. Tack was measured in grams.

### 180° Peel Adhesion Strength

Peel adhesion strength was measured in the following manner, which generally followed the procedure described in ASTM D 3330-90. Peel adhesion strength was measured at 72 °F (22 °C) and 50% relative humidity (RH) using a Zwick model Z005 tensile tester (Zwick USA, Kennesaw, GA). A tape test specimen measuring 1 inch (2.54 centimeters) wide by approximately 5 inches (12.7 centimeters) long was applied to a pre-cleaned, flat, rigid substrate (either stainless steel (SS), polypropylene (PP), or polyvinyl chloride (PVC)). Substrates were cleaned by wiping once with a solvent (either methyl ethyl ketone or heptane) and a clean lint free tissue, then allowed to air dry prior to use. SS substrates were 0.052 inches (1.31 millimeters) thick, PP substrates were 0.188 inches (4.76 millimeters) thick, and PVC substrates were 0.0625 inches (1.59 millimeters) thick. To apply the tape specimen to the substrate, a mechanical roller machine (generally desired) or hand operated 4.5 pound (ca. 2 kilogram) hard rubber roller (no additional force necessary) at a rate of approximately 2 inches (50 millimeters)/second or mechanical roller machine set to 120 inches/minute was used to ensure intimate contact with the substrate surface. The test specimen was either tested immediately after preparation (i.e., an immediate dwell time, reported as "Instant Peel") or was equilibrated (dwelled) for 24 hours at 72 °F (22 °C) and 50% relative humidity prior to testing (reported as "24 hr Peel"). The free end of the tape test specimen was doubled back at an angle of 180° and attached to the load cell apparatus. The substrate was attached to the moveable platen on the instrument. The peel adhesion test was run at a constant rate of 12 inches (30.48 centimeters)/minute and the average peel adhesion force was recorded in ounces / inch. The results were used to obtain an average which was converted to Newtons / decimeter (N/dm).

Static Shear Adhesion

Static shear adhesion was measured in the following manner, which generally followed the procedure described in ASTM D 3654-88. Stainless steel (SS) panels measuring 2 inches (5.08 centimeters) by 2 inches (5.08 centimeters) were cleaned by wiping them three times with a solvent (either methyl ethyl ketone or heptane) and a clean lint-free tissue. A tape test specimen measuring 1 inch (2.54 centimeters) wide by approximately 2 inches (5.08 centimeters) long was centered on a cleaned panel and adhered to one end such that the tape test specimen overlapped the panel by 1 inch (2.54 centimeters) in the lengthwise direction and the tape specimen edges were parallel with the edges of the panel. The tape test specimen was then rolled down one time in each direction using a 4.5 pound (ca. 2 kilogram) rubber roller. The tape test specimen/test panel assembly was conditioned for 24 hours at room temperature and then suspended in a stand at room temperature and the panel tilted at an angle of 2 degrees from vertical to ensure a shear force. A 500 gram weight was hung from the free end of the tape test specimen. The time, in minutes, for the tape test specimen to fall from the panel was recorded. The test was terminated if failure had not occurred in 10,000 minutes and the result recorded as "10,000+".

180° Peel Adhesion Strength on Human Skin

The backs of twelve healthy human subjects were washed with a dilute solution of soap and water (approximately 1% suspension), rinsed with tepid water, and gently dried with a soft paper towel. For a given subject, a tape test specimen measuring 1 inch (2.54 centimeters) wide by 3 inches (7.62 centimeters) long was placed on the subjects back so that the long axis of the tape test specimen was oriented perpendicular to the subject’s spine. The order of application of the tape test specimens was randomized (i.e., rotational placement) on each subject. The tapes were secured to the skin using a 4.5 pound (ca. 2 kilograms) roller, rolling the tapes once in each direction. After a given dwell time, the tape test specimens were removed at 180° with an Instron peel tester (Instron, Norwood, MA) at a constant rate of 6 inches (15.2 centimeters) / minute and the results recorded in grams / inch (2.54 cm). The average peel force required to remove the tape test specimen was calculated based on twelve tests across the twelve randomized subjects (i.e., one test per subject). Results are reported as "Skin Peel Adhesion Strength." The following dwell times were used:

T0 peel adhesion: tapes were removed within 5 to 15 minutes after initial application;

$T0_1$: T0 peel adhesion of the tape when applied to skin a first time;
$T0_2$: T0 peel adhesion of the same tape when repositioned and applied to a different skin location a second time;
$T0_3$: T0 peel adhesion of the same tape when repositioned and applied to a different skin location a third time;

T24 peel adhesion: tapes were removed after 24 hours after initial application;
T48 peel adhesion: tapes were removed after 48 hours after initial application;
T72 peel adhesion: tapes were removed after 72 hours after initial application; and
T96 peel adhesion: tapes were removed after 96 hours after initial application.

Weight Average Molecular Weight ($M_w$) of Extractable PDMS and Weight % (wt. %) Extractable PDMS from adhesives

Gel permeation chromatography (GPC) with light scattering (LS) detection and differential refractive index (dRI) detection was used for measuring the absolute or standardless molecular weight averages of the uncured and cured components of the adhesive (i.e., PDMS and silicate resin) from the test tape specimens. Toluene was used as solvent and eluent. Molecular weight calculations and recovery calculations require the differential refractive index increment (dn/dc) of each component in the eluent. The dn/dc of PDMS in toluene was obtained from the literature (-0.095 mL/g).
The soluble portion of PDMS (% extractables) was measured by quantifying its fraction upon dissolution, filtration and passage through the GPC column. The chromatographic conditions allowed the separation of PDMS and silicate resin according to their hydrodynamic size in solution. The area of the dRI chromatogram of each component is proportional to its dn/dc times its recovered mass. Therefore, the recovered mass of PDMS can be measured by integrating its dRI peak in the chromatogram. The % extractables is defined by Equation 1:

$$\% \text{ extractables} = \frac{w_{PDMS-r}}{w_{adhesive-t}} \times 100\% \qquad (1)$$

where $w_{PDMS-r}$ is the recovered weight of the PDMS; $w_{adhesive-t}$ is the maximum weight of recovered adhesive in the known GPC injection volume assuming total dissolution and total recovery. For example for a solution of concentration 3 μg/μL and for an injection volume of 70 μL; the maximum recovered mass is (3 μg/μL × 70 μL) = 210 μg.

Because the samples included not only adhesive but backing as well, it was necessary to apply a normalization factor to the % extractables values in order to make them relative to adhesive only (without the normalization factor, they are relative to adhesive plus backing). The backing was not soluble in toluene (i.e. 0% extractable). The basis weight of the adhesive layer and backing layer were known. Typical basis weights were 100 $g/m^2$ for the adhesive layer and 70 $g/m^2$ for the backing layer. The normalization factor was defined as (basis weight of the adhesive layer + basis weight of the backing layer) / (basis weight of the adhesive layer). For typical basis weights this was (100+70)/(70) = 1.7.

An 1260 Infinity GPC (comprised of isocratic pump, degasser, column compartment and autosampler) from Agilent Technologies (Santa Clara, California, United States of America) was used, operated at a flow rate of 1.0 mL/min. The GPC column was a Jordi Gel DVB Mixed Bed (250 millimeter length × 10 millimeter internal diameter) from Jordi Labs, LLC (Mansfield, MA). A DAWN® HELEOS® II 18 angle Light Scattering detector and an Optilab® T-rEX differential refractive index detector both from Wyatt Technology Corporation (Santa Barbara, CA) were used. Data were collected and analyzed using software ASTRA® version 6 from Wyatt Technology Corporation. The column compartment and dRI detector were set to 40 °C.

The tape test specimen samples (i.e., adhesive + backing) were weighed into glass scintillation vials. Toluene (Omnisolv® grade from EMD Millipore Corporation) was added to each vial and its weight was recorded; the vials were capped in order to prevent evaporation of the toluene solvent. The solutions were targeted at 50 mg of sample / g of toluene. The reported density of toluene (0.8669 g/mL) was used for computing its volume. The volume of solution was assumed to be equal to the volume of toluene since the volume contribution from the sample was considered to be negligible compared to the volume of solution. The vials were swirled on an Advanced Digital Shaker from VWR (Radnor, Pennsylvania, United States) for at least 16 hours in order to allow extraction/dissolution. The solutions were filtered through 0.45 micrometer PTFE syringe filters and placed into autosampler vials that were tightly crimped in order to prevent evaporation of the toluene solvent. These solutions were placed into the autosampler of the GPC system for analysis. The injection volume was set to 70 microliters. The results reported, i.e., the weight average molecular weight of the extractable PDMS (in grams per mol) and weight percent of extractable silicone from the adhesive, are from 1-2 measurements (test results run in duplicate were averaged).

BCA Test

BCA (bicinchoninic acid) assay tests were carried out for the clinical samples obtained from the 180° Peel Adhesion Strength on Human Skin studies. BCA testing allows for colorimetric detection and quantification of skin protein (keratin) removed from skin by the adhesive of the clinical sample. The clinical samples were delivered to the BCA test in sterile Petri dish containers, the adhesive side facing up. Latex-free gloves were worn throughout the clinical sample removal and the sample preparation for the BCA test. For the BCA test, 15.0 milliliters of an elution buffer solution (containing phosphate buffered saline, prepared from sterile concentrated PBS from OmniPure and further diluted 10-fold with Milli-Q UltraPure water), 3 mM ethylenediaminetetraacetic acid, 0.1% Triton X-100) were pipetted to a sterile Petri dish. Each clinical sample, 1 inch (2.54 centimeters) wide by 3 inches (7.62 centimeters) long, was transferred to the Petri dish and exposed to the elution buffer solution, the adhesive side facing down. The samples were then shaken in the elution buffer solution on an orbital shaker for approximately 18 hours at room temperature. The clinical sample solutions were transferred into sterile polypropylene tubes and vortexed. 150 microliter aliquots of the extract solutions were pipetted into a 96-well microplate. Each clinical sample solution was assayed in duplicate. BCA assay calibration standards were prepared in the aforementioned elution buffer solution and analyzed in triplicate on the same 96-well microplate than the clinical sample solutions. Control samples (tape test specimens not worn on skin) were prepared and analyzed similarly to the clinical samples. The BCA assay was carried out using Pierce BCA protein assay reagents (Pierce Micro-BCA kit reagents A, B, and C, available from ThermoFisher Scientific) at the mixing ratio adjusted to A/B/C = 25/24/2 (v/v/v). 150 μL aliquots of the BCA reagent mixture were pipetted into each sample well on the microplate. The microplate was covered and shaken at the plate reader for 30 seconds and incubated for 2.5 hours at 37 °C. The absorbance was recorded at 562 nm using a SPECTRAmax M2e plate reader. The BCA test results (micrograms per microliter) were reported as an average of duplicate measurements of each clinical sample.

Evaluation of Extractable PDMS in Commercially Available Tapes

The weight average molecular weight of extractable silicone as well as the weight percent of extractable silicone from the adhesive were determined according the test methods previously described for a series of commercially available tapes (Commercial Tapes A-F). Results are presented in Table 1, below.

Table 1

| Example | Description | $M_w$ of extractable silicone (g/mol) | Extractable silicone from adhesive (wt. %) |
|---|---|---|---|
| CE-1 | Commercial Tape A | 186,000 | 18.0 |
| CE-2 | Commercial Tape B | 204,000 | 32.4 |
| CE-3 | Commercial Tape C | 192,000 | 37.0 |
| CE-4 | Commercial Tape D | 191,000 | 28.5 |
| CE-5 | Commercial Tape E | 186,000 | 27.9 |
| CE-6 | Commercial Tape F | 169,000 | 45.1 |

The above table shows that the weight average molecular weight of the extractable silicone from commercially available medical tapes and dressings with silicone adhesives was less than or equal to 204,000 g/mol.

Evaluation of Extractable PDMS in Non-Commercially Available Tapes

The weight average molecular weight of extractable silicone as well as the weight percent of extractable silicone from the adhesive were determined according the test methods previously described for selected e-beam crosslinked silicone adhesive examples in U.S. Pat. No. 8,541,481, International Pat. Appl. Publ. No. WO2016/191236, and International Pat. Appl. Publ. No. WO2016/191235. Results are presented in Table 2, below.

Table 2

| Example | Brief Description | $M_w$ of extractable silicone (g/mol) | Extractable silicone from adhesive (wt. %) |
|---|---|---|---|
| CE-7 | Prepared as described in Example 4 of U.S. Pat. No. 8,541,481, irradiated at a e-beam dosage of 2 Mrad. This example included EL Polymer NA (70 wt. %) and DC-200-A (30 wt. %; DC-200-A is a 5,000 cSt PDMS fluid available from Dow Corning). | 157,000 | 45.2 |
| CE-8 | Identical to CE-7, but irradiated with an e-beam dosage of 2.5 Mrad. | 123,000 | 39.5 |
| CE-9 | Prepared as described in Example 8 of U.S. Pat. No. 8,541,481, irradiated at a e-beam dosage of 2 Mrad. This example included EL Polymer NA (60 wt. %) and DC-200-A (35 wt. %), and MQ Resin (5 wt. %). | 178,000 | 53.9 |
| CE-10 | Identical to CE-9, but irradiated with an e-beam dosage of 2.5 Mrad. | 120,000 | 45.8 |
| CE-11 | Prepared as described in Example 12 of U.S. Pat. No. 8,541,481, irradiated at a e-beam dosage of 2 Mrad. This example included EL Polymer NA (50 wt. %) and DC-200-A (15 wt. %), and MQ Resin (35 wt. %). | 255,000 | 38.6 |
| CE-12 | Identical to CE-11, but irradiated with an e-beam dosage of 2.5 Mrad. | 198,000 | 35.4 |
| CE-13 | Prepared as described in International Pat. Appl. Publ. No. WO2016/191236 (pages 8-9), irradiated at a e-beam dosage of 40 KGy (4 Mrad). This example included TSF451-100M (76.9 wt. %) and MQ Resin (23.1 wt. %). | 228,000 | 15.9 |

(continued)

| Example | Brief Description | $M_w$ of extractable silicone (g/mol) | Extractable silicone from adhesive (wt. %) |
|---|---|---|---|
| CE-14 | Prepared as described in International Pat. Appl. Publ. No. WO2016/191235 (page 18), irradiated at a e-beam dosage of 60 KGy (6 Mrad). This example included 350N (62.5 wt. %) and MQ Resin (37.5 wt. %). | 232,000 | 16.2 |

The above table shows that the weight average molecular weight of the extractable silicone from silicone adhesives disclosed in U.S. Pat. No. 8,541,481, International Pat. Appl. Publ. No. WO2016/191236, and International Pat. Appl. Publ. No. WO2016/191235 was less than or equal to 255,000 g/mol.

Adhesive Tape Preparation

Except where indicated adhesive input components (e.g., PDMS and MQ Resin, etc.) for all examples and comparative examples were fed into a twin screw extruder, at substantially free of solvent at a temperature of approximately 204°C (400°F) and hot-melt coated onto Backing 1 at a thickness of 100 micrometers (4 mil) using a die coating at 93°C (200°F). The coatings were then crosslinked with e-beam irradiation in an inerted chamber (< 50 ppm oxygen) at the indicated dosage, at an accelerating voltage of 280-300 keV, to form tacky adhesive tapes. The coated and cured adhesive tapes were then laminated to Release Liner 1. Mixing, coating, and e-beaming processes are further detailed in U.S. Pat. Nos. 8,541,481, 9,359,529, and elsewhere.

Table 3

| Example | Brief Description | $M_w$ of extractable silicone (g/mol) | Extractable silicone from adhesive (wt. %) | Instant Peel on SS (N/dm) | Instant Peel on PP (N/dm) | Tack (g) |
|---|---|---|---|---|---|---|
| EX-1 | AK1000K (90 wt. %) + MQ Resin (10 wt. %), 1.5 Mrad e-beam dosage (280 keV) | 529,000 | 27.7 | NA | NA | NA |
| EX-2 | AK1000K (90 wt. %) + MQ Resin (10 wt. %), 1.6 Mrad e-beam dosage (280 keV) | 416,000 | 43.1 | NA | NA | NA |
| EX-3 | AK1000K (90 wt. %) + MQ Resin (10 wt. %), 2.0 Mrad e-beam dosage (280 keV) | 383,000 | 29.2 | 11.21 | 13.92 | 3.454 |
| CE-15 | AK1000K (90 wt. %) + MQ Resin (10 wt. %), 3.0 Mrad e-beam dosage (280 keV) | 171,000 | 22.9 | 7.90 | 9.84 | 0.489 |
| NA = Not applicable or not tested. | | | | | | |

The above table shows the influence of e-beam dosage on the silicone extractable profile (e.g., weight average molecular weight of extractable silicone and the amount of extractable silicone) in which the input adhesive components and their associated amounts were the same (i.e., 90 wt. % AK1000K and 10 wt. % MQ Resin). Surprisingly, the output adhesives and their tape properties (e.g. instant peel and tack values) were influencedby the e-beam dosage even though the input adhesive is the same (cf. EX-1 to Ex-3 and CE-15).

Table 4

| Example | Brief Description | Instant Peel on SS (N/dm) | 24 hr Peel on SS (N/dm) | Skin Peel Adhesion (g/in) | | |
|---|---|---|---|---|---|---|
| | | | | T0 | T48 | T96 |
| EX-3 | AK1000K (90 wt. %) + MQ Resin (10 wt. %), 2.0 Mrad e-beam dosage (280 keV) | 15.2 | 15.0 | 174 | 206 | 158 |
| CE-1 | Commercial Tape A | 5.87 | 7.41 | 66 | 50 | 51 |

The above table shows the increased peel adhesion to both stainless steel and human skin, in comparison to Commercial Tape A.

Table 5

| Example | Brief Description | Skin Peel Adhesion (g/in) | | | | BCA (μg/mL) | |
|---|---|---|---|---|---|---|---|
| | | $T0_1$ | $T0_2$ | $T0_3$ | T24 | $T0_3$ | T24 |
| EX-3 | AK1000K (90 wt. %) + MQ Resin (10 wt. %), 2.0 Mrad e-beam dosage (280 keV) | 200 | 108 | 109 | 284 | 2.1 | 4.7 |
| CE-1 | Commercial Tape A | 84 | 58 | 54 | 89 | 3.9 | 6.4 |
| CE-16 | Commercial Tape G | 32 | 13 | 8 | 111 | 5.5 | 9.8 |
| CE-17 | Commercial Tape H | 89 | 23 | 17 | 291 | 8.1 | 12.2 |

The above table shows that the inventive silicone adhesives such as those of EX-3, surprisingly can provide high adhesion to skin, while at the same time display very low stripping of skin protein when tapes including such adhesives are removed from skin. This unique combination of adhesive properties was pronounced in comparison commercially available medical tapes containing either silicone adhesives (Commercial Tape A) or acrylate adhesives (Commercial Tapes G or H).

Table 6

| Example | Brief Description | $M_w$ of extractable silicone (g/mol) | Extractable silicone from adhesive (wt. %) | Instant Peel on SS (N/dm) | Instant Peel on PP (N/dm) | Tack (g) |
|---|---|---|---|---|---|---|
| EX-4 | AK1000K (80 wt. %) + MQ Resin (20 wt. %), 1.0 Mrad e-beam dosage (280 keV) | 610,000 | 51.0 | NA | NA | NA |
| EX-5 | AK1000K (80 wt. %) + MQ Resin (20 wt. %), 1.8 Mrad e-beam dosage (280 keV) | 420,000 | 33.8 | NA | NA | NA |
| EX-6 | AK1000K (80 wt. %) + MQ Resin (20 wt. %), 2.0 Mrad ebeam dosage (280 keV) | 406,000 | 41.8 | 13.34 | 12.62 | 4.488 |
| EX-7 | AK1000K (80 wt. %) + MQ Resin (20 wt. %), 2.1 Mrad ebeam dosage (280 keV) | 383,000 | 29.3 | NA | NA | NA |
| EX-8 | AK1000K (80 wt. %) + MQ Resin (20 wt. %), 2.3 Mrad ebeam dosage (280 keV) | 336,000 | 37.8 | NA | NA | NA |
| CE-18 | AK1000K (80 wt. %) + MQ Resin (20 wt. %), 3.0 Mrad ebeam dosage (280 keV) | 225,000 | 28.2 | 9.75 | 9.27 | 1.77 |

(continued)

| Example | Brief Description | $M_w$ of extractable silicone (g/mol) | Extractable silicone from adhesive (wt. %) | Instant Peel on SS (N/dm) | Instant Peel on PP (N/dm) | Tack (g) |
|---|---|---|---|---|---|---|
| CE-19 | AK1000K (80 wt. %) + MQ Resin (20 wt. %), 4.0 Mrad ebeam dosage (280 keV) | 177,000 | 18.2 | 8.43 | 6.74 | 0.416 |
| NA = Not applicable or not tested. | | | | | | |

The above table shows the influence of e-beam dosage and wt. % tackifier (20 wt. % in Table 6 vs 10 wt. % in Table 3) on the silicone extractable profile (e.g., weight average molecular weight of extractable silicone and the amount of extractable silicone) in which the input adhesive components and their associated amounts were the same (i.e., 80 wt. % AK1000K and 20 wt. % MQ Resin). Surprisingly, the output adhesives and their tape properties (e.g. instant peel and tack values) were influenced by the e-beam dosage, with CE-18 and CE-19 displaying decreased peel adhesion and tack in comparison to EX-6 which received a lower e-beam dosage, even though the input adhesive is the same.

Table 7

| Example | Brief Description | $M_w$ of extractable silicone (g/mol) | Extractable silicone from adhesive (wt. %) | Instant Peel on SS (N/dm) | Instant Peel on PP (N/dm) | Tack (g) |
|---|---|---|---|---|---|---|
| EX-9 | AK1000K (70 wt. %) + MQ Resin (30 wt. %), 1.0 Mrad e-beam dosage (280 keV) | 665,000 | 55.4 | NA | NA | NA |
| EX-10 | AK1000K (70 wt. %) + MQ Resin (30 wt. %), 2.0 Mrad e-beam dosage (280 keV) | 444,000 | 32.3 | 15.08 | 14.48 | 5.129 |
| CE-20 | AK1000K (70 wt. %) + MQ Resin (30 wt. %), 3.0 Mrad e-beam dosage (280 keV) | 271,000 | 26.6 | 10.53 | 11.86 | 2.743 |
| CE-21 | AK1000K (70 wt. %) + MQ Resin (30 wt. %), 4.0 Mrad e-beam dosage (280 keV) | 192,000 | 19.1 | 10.15 | 10.92 | 0.956 |
| NA = Not applicable or not tested. | | | | | | |

The above table shows the influence of e-beam dosage and wt. % tackifier (30 wt. % in Table 7 vs 20 wt.% in Table 6) on the silicone extractable profile (e.g., weight average molecular weight of extractable silicone and the amount of extractable silicone) in which the input adhesive components and their associated amounts were the same (i.e., 70 wt. % AK1000K and 30 wt. % MQ Resin). Surprisingly, the output adhesives and their tape properties (e.g. the instant peel and tack values) were influenced by the e-beam dosage, with CE-20 and CE-21 displaying decreased peel adhesion and tack in comparison to EX-10 which received a lower e-beam dosage, even though the input adhesive is the same

Table 8

| Example | Brief Description | $M_w$ of extractable silicone (g/mol) | Extractable silicone from adhesive (wt. %) | Instant Peel on SS (N/dm) | Instant Peel on PP (N/dm) | Tack (g) |
|---|---|---|---|---|---|---|
| EX-11 | AK1000K (70 wt. %) + AK60K (10 wt. %) + MQ Resin (20 wt. %), 1.0 Mrad e-beam dosage (280 keV) | 454,000 | 44.6 | 13.44 | 14.01 | 4.749 |
| EX-12 | AK1000K (70 wt. %) + AK60K (10 wt. %) + MQ Resin (20 wt. %), 2.0 Mrad e-beam dosage (280 keV) | 325,000 | 36.9 | 11.77 | 13.87 | 4.319 |
| CE-22 | AK1000K (70 wt. %) + AK60K (10 wt. %) + MQ Resin (20 wt. %), 3.0 Mrad e-beam dosage (280 keV) | 197,000 | 27.8 | 9.47 | 10.32 | 1.279 |
| CE-23 | AK1000K (70 wt. %) + AK60K (10 wt. %) + MQ Resin (20 wt. %), 4.0 Mrad e-beam dosage (280 keV) | 156,000 | 19.4 | 8.10 | 7.99 | 0.342 |

The above table shows the influence of e-beam dosage and blends of PDMS (70 wt. % AK1000K and 10 wt. % AK60K in Table 8 vs 80 wt. % AK1000K in Table 6) on the silicone extractable profile (e.g., weight average molecular weight of extractable silicone and the amount of extractable silicone) in which the input adhesive components and their associated amounts were the same (i.e., 70 wt. % AK1000K, 10 wt. % AK60K, and 20 wt. % MQ Resin),. Surprisingly, the output adhesives and their tape properties (e.g. the instant peel and tack values) were influenced by the e-beam dosage, with CE-22 and CE-23 displaying decreased peel adhesion and tack in comparison to either EX-11 or EX-12, both of which received a lower e-beam dose, even though the input adhesive is the same

Table 9

| Example | Brief Description | $M_w$ of extractable silicone (g/mol) | Extractable silicone from adhesive (wt. %) | Instant Peel on SS (N/dm) | Instant Peel on PP (N/dm) | Tack (g) |
|---|---|---|---|---|---|---|
| EX-13 | AK1000K (25 wt. %) + AK60K (25 wt. %) + MQ Resin (50 wt. %), 1.0 Mrad e-beam dosage (280 keV) | 601,750 | 36.4 | NA | NA | NA |
| EX-14 | AK1000K (25 wt. %) + AK60K (25 wt. %) + MQ Resin (50 wt. %), 2.0 Mrad e-beam dosage (280 keV) | 487,000 | 29.9 | 26.32 | 32.38 | 3.286 |
| EX-15 | AK1000K (25 wt. %) + AK60K (25 wt. %) + MQ Resin (50 wt. %), 3.0 Mrad e-beam dosage (280 keV) | 315,900 | 27.4 | 26.78 | 25.45 | 4.211 |
| NA = Not applicable or not tested. | | | | | | |

The above table shows the influence of e-beam dosage and blends of PDMS on the silicone extractable profile (e.g., weight average molecular weight of extractable silicone and the amount of extractable silicone) in which the input components and their associated amounts were the same (i.e., 25 wt. % AK1000K, 25 wt. % AK60K, and 50 wt. % MQ

Resin), and further that blends of PDMS input materials may be used.

Table 10

| Example | Brief Description | $M_w$ of extractable silicone (g/mol) | Extractable silicone from adhesive (wt. %) | Instant Peel on SS (N/dm) | Instant Peel on PP (N/dm) | Tack (g) |
|---|---|---|---|---|---|---|
| EX-16 | EL Polymer NA (90 wt. %) + MQ Resin (10 wt. %), 0.5 Mrad | 441,000 | 26.0 | 10.38 | 5.74 | 0.204 |
| | e-beam dosage (280 keV) | | | | | |
| CE-24 | EL Polymer NA (90 wt. %) + MQ Resin (10 wt. %), 1.0 Mrad e-beam dosage (280 keV) | 309,000 | 16.5 | 5.48 | 2.83 | 0.068 |
| CE-25 | EL Polymer NA (90 wt. %) + MQ Resin (10 wt. %), 2.0 Mrad e-beam dosage (280 keV) | 221,000 | 9.4 | 2.74 | 0.93 | 0.017 |

The above table shows the influence of e-beam dosage and input silicone polymer (EL Polymer NA in Table 10 vs AK1000K in Table 3) on the silicone extractable profile (e.g., weight average molecular weight of extractable silicone and the amount of extractable silicone) in which the input adhesive components and their associated amounts were the same (i.e., 90 wt. % EL Polymer NA and 10 wt. % MQ Resin). Surprisingly, the output adhesives and their tape properties (e.g. the instant peel and tack values) were influenced by the e-beam dosage, with CE-24 and CE-25 displaying decreased peel adhesion and tack in comparison to EX-16 which received a lower e-beam dosage, even though the input adhesive is the same. It is also a surprise that CE-25 in Table 10 displayed lower Mw and lower wt.% of extractable silicones, lower instant peel, and lower tack in comparison to EX-3 in Table 3, even though the ebeam dosage is same (i.e. 2.0 mrad) and EL polymer NA (10M cSt) has much higher viscosity than AK1000K (1000K cSt).

Table 11

| Example | Brief Description | $M_w$ of extractable silicone (g/mol) | Extractable silicone from adhesive (wt. %) | Instant Peel on SS (N/dm) | Instant Peel on PP (N/dm) | Tack (g) |
|---|---|---|---|---|---|---|
| EX-17 | EL Polymer NA (80 wt. %) + MQ Resin (20 wt. %), 0.5 Mrad e-beam dosage (280 keV) | 450,000 | 29.2 | 9.81 | 12.67 | 0.653 |
| CE-26 | EL Polymer NA (80 wt. %) + MQ Resin (20 wt. %), 1.0 Mrad e-beam dosage (280 keV) | 315,000 | 21.1 | 7.16 | 8.84 | 0.163 |
| CE-27 | EL Polymer NA (80 wt. %) + MQ Resin (20 wt. %), 2.0 Mrad e-beam dosage (280 keV) | 184,000 | 13.3 | 3.22 | 3.69 | 0.029 |
| CE-28 | EL Polymer NA (80 wt. %) + MQ Resin (20 wt. %), 3.0 Mrad e-beam dosage (280 keV) | 121,000 | 10.2 | 1.70 | 2.06 | 0.022 |

The above table shows the influence of e-beam dosage and input silicone polymer (EL polymer NA in Table 11 vs AK1000K in Table 6) on the silicone extractable profile (e.g., weight average molecular weight of extractable silicone and the amount of extractable silicone) in which the input adhesive components and their associated amounts were the same (i.e., 80 wt. % EL Polymer NA and 20 wt. % MQ Resin). Surprisingly the output adhesives and their tape properties (e.g. the instant peel and tack values were influenced by the e-beam dosage, with CE-27 and CE-28 displaying decreased peel adhesion and tack in comparison to EX-17 which received a lower e-beam dosage, even though the input adhesive is the same. It is also a surprise that CE-27 in Table 11 displayed lower Mw and lower wt.% of extractable silicones, lower instant peel, and lower tack in comparison to EX-6 in Table 6, even though the ebeam dosage is same (i.e. 2.0 mrad) and EL polymer NA (10M cSt) has much higher viscosity than AK1000K (1000K cSt).

Table 12

| Example | Brief Description | $M_w$ of extractable silicone (g/mol) | Extractable silicone from adhesive (wt. %) | Instant Peel on SS (N/dm) | Instant Peel on PP (N/dm) | Tack (g) |
|---|---|---|---|---|---|---|
| EX-18 | EL Polymer NA (40 wt. %) + AK60K (40 wt. %) + MQ Resin (20 wt. %), 0.5 Mrad e-beam dosage (280 keV) | 367,000 | 34.1 | 13.64 | 15.39 | 3.974 |
| EX-19 | EL Polymer NA (40 wt. %) + AK60K (40 wt. %) + MQ Resin (20 wt. %), 1.0 Mrad e-beam dosage (280 keV) | 343,000 | 44.8 | 10.29 | 11.79 | 3.4232 |
| CE-29 | EL Polymer NA (40 wt. %) + AK60K (40 wt. %) + MQ Resin (20 wt. %), 2.0 Mrad e-beam dosage (280 keV) | 185,000 | 34.9 | 8.54 | 8.99 | 0.8904 |
| CE-30 | EL Polymer NA (40 wt. %) + AK60K (40 wt. %) + MQ Resin (20 wt. %), 3.0 Mrad e-beam dosage (280 keV) | 127,000 | 25.6 | 7.92 | 6.52 | 0.2954 |

The above table shows the influence of e-beam dosage, input silicone polymer, and blends of PDMS on the silicone extractable profile (e.g., weight average molecular weight of extractable silicone and the amount of extractable silicone) in which the input adhesive components and their associated amounts were the same (i.e., 40 wt. % EL Polymer NA, 40 wt. % AK60K, and 20 wt. % MQ Resin), and further that blends of PDMS input materials may be used. Surprisingly, the output adhesives and their tape properties (e.g. the instant peel and tack values) were influenced by the e-beam dosage, with CE-29 and CE-30 displaying decreased peel adhesion and tack in comparison to either EX-18 or EX-19 which received a lower e-beam dosage, even though the input adhesive is the same. It is also a surprise that EX-19 in Table 12 displayed higher Mw and higher wt.% of extractable silicones, higher instant peel, and higher tack in comparison to CE-26 in Table 11, even though the ebeam dosage (i.e. 1.0 mrad) and wt. % of tackifier (i.e. 20 wt.%) is same and EL polymer NA (10M cSt) has much higher viscosity than AK1000K (1000K cSt).

Table 13

| Example | Brief Description | $M_w$ of extractable silicone (g/mol) | Extractable silicone from adhesive (wt. %) | Instant Peel on SS (N/dm) | Instant Peel on PP (N/dm) | Tack (g) |
|---|---|---|---|---|---|---|
| EX-20 | EL Polymer NA (70 wt. %) + MQ Resin (30 wt. %), 0.5 Mrad e-beam dosage (280 keV) | 528,000 | 29.1 | 10.17 | 12.05 | 2.08 |

(continued)

| Example | Brief Description | $M_w$ of extractable silicone (g/mol) | Extractable silicone from adhesive (wt. %) | Instant Peel on SS (N/dm) | Instant Peel on PP (N/dm) | Tack (g) |
|---|---|---|---|---|---|---|
| CE-31 | EL Polymer NA (70 wt. %) + MQ Resin (30 wt. %), 1.0 Mrad e-beam dosage (280 keV) | 361,000 | 19.0 | 8.47 | 8.55 | 0.5 |
| CE-32 | EL Polymer NA (70 wt. %) + MQ Resin (30 wt. %), 2.0 Mrad e-beam dosage (280 keV) | 212,000 | 12.8 | 5.01 | 6.41 | 0.114 |
| CE-33 | EL Polymer NA (70 wt. %) + MQ Resin (30 wt. %), 3.0 Mrad e-beam dosage (280 keV) | 150,000 | 9.6 | 4.16 | 4.81 | 0.04 |

The above table shows the influence of e-beam dosage on the silicone extractable profile (e.g., weight average molecular weight of extractable silicone and the amount of extractable silicone) in which the input adhesive components and their associated amounts were the same (i.e., 70 wt. % EL Polymer NA and 30 wt. % MQ Resin). Surprisingly, the output adhesives and their tape properties (e.g. the instant peel and tack values) were influenced by the e-beam dosage, with CE-31, CE-32, and CE-33 displaying decreased peel adhesion and tack in comparison to EX-21 which received a lower e-beam dosage, even though the input adhesive is the same.

Table 14

| Example | Brief Description | $M_w$ of extractable silicone (g/mol) | Extractable silicone from adhesive (wt. %) | Instant Peel on SS (N/dm) | Instant Peel on PP (N/dm) | Tack (g) |
|---|---|---|---|---|---|---|
| EX-21 | DMS-T72 (70 wt. %) + MQ Resin (30 wt. %), 0.5 Mrad e-beam dosage (280 keV) | 516,000 | 26.4 | 14.80 | 15.49 | 1.888 |
| CE-34 | DMS-T72 (70 wt. %) + MQ Resin (30 wt. %), 1.0 Mrad e-beam dosage (280 keV) | 366,000 | 21.8 | 10.89 | 10.14 | 0.515 |
| CE-35 | DMS-T72 (70 wt. %) + MQ Resin (30 wt. %), 2.0 Mrad e-beam dosage (280 keV) | 230,000 | 12.0 | 6.25 | 7.75 | 0.046 |
| CE-36 | DMS-T72 (70 wt. %) + MQ Resin (30 wt. %), 3.0 Mrad e-beam dosage (280 keV) | 213,000 | 7.3 | 2.82 | 4.52 | 0 |

The above table shows the influence of e-beam dosage on the silicone extractable profile (e.g., weight average molecular weight of extractable silicone and the amount of extractable silicone) in which the input adhesive components and their associated amounts were the same (i.e., 70 wt. % DMS-T72 and 30 wt. % MQ Resin). Surprisingly, the output adhesives and their tape properties (e.g the instant peel and tack values) were influenced by the e-beam dosage, with CE-35 and CE-36 displaying decreased peel adhesion and tack in comparison to EX-21 which received a lower e-beam dosage, even though the input adhesive is the same.

Table 15

| Example | Brief Description | $M_w$ of extractable silicone (g/mol) | Extractable silicone from adhesive (wt. %) | Instant Peel on SS (N/dm) | Instant Peel on PP (N/dm) | Tack (g) |
|---|---|---|---|---|---|---|
| EX-22 | DMS-T72 (35 wt. %) + AK60K (35 wt. %) + MQ Resin (30 wt. %), 1.0 Mrad e-beam dosage (280 keV) | 392,000 | 41.9 | 16.64 | 23.97 | 4.147 |
| EX-23 | DMS-T72 (35 wt. %) + AK60K (35 wt. %) + MQ Resin (30 wt. %), 2.0 Mrad e-beam dosage (280 keV) | 225,000 | 32.3 | 13.28 | 15.74 | 4.574 |
| EX-24 | DMS-T72 (35 wt. %) + AK60K (35 wt. %) + MQ Resin (30 wt. %), 3.0 Mrad e-beam dosage (280 keV) | 152,000 | 26.2 | 10.10 | 11.53 | 1.856 |
| CE-37 | DMS-T72 (35 wt. %) + AK60K (35 wt. %) + MQ Resin (30 wt. %), 4.0 Mrad e-beam dosage (280 keV) | 132,000 | 18.6 | 9.06 | 9.43 | 0.555 |
| CE-38 | DMS-T72 (35 wt. %) + AK60K (35 wt. %) + MQ Resin (30 wt. %), 5.0 Mrad e-beam dosage (280 keV) | 100,000 | 17.2 | 8.35 | 8.10 | 0.244 |

The above table shows the influence of e-beam dosage and blends of PDMS on the silicone extractable profile (e.g., weight average molecular weight of extractable silicone and the amount of extractable silicone) in which the input components and their associated amounts were the same (i.e., 35 wt. % DMS-T72, 35 wt. % AK60K, and 30 wt. % MQ Resin), and further that blends of PDMS input materials may be used. Surprisingly, the output adhesives and their tape properties (e.g. the instant peel and tack values) were influenced by the e-beam dosage, with CE-37 and CE-38 displaying decreased peel adhesion and tack in comparison to either EX-23 or EX-24 which received a lower e-beam dosage, even though the input adhesive is the same. It is also a surprise that EX-23 in Table 15 (blends of DMS-T72 with AK60K) displayed higher adhesion and higher tack in comparison to CE-35 in Table 14 (DMS-T72 alone), even though the ebeam dose (i.e. 2.0 mrad) and wt. % tackifier,(i.e. 30 wt. %) is same

Table 16

| Example | Brief Description | $M_w$ of extractable silicone (g/mol) | Extractable silicone from adhesive (wt. %) | Instant Peel on SS (N/dm) | 24 hr Peel on SS (N/dm) | Skin Peel Adhesion (g/in) | | |
|---|---|---|---|---|---|---|---|---|
| | | | | | | T0 | T48 | T96 |
| EX-3 | AK1000K (90 wt. %) + MQ Resin (10 wt. %), 2.0 Mrad e-beam dosage (280 keV) | 383,000 | 29.2 | 15.21 | 15.00 | 174 | 206 | 158 |
| EX-25 | AK500K (90 wt. %) + MQ Resin (10 wt. %), 2.5 Mrad e-beam dosage (280 keV) | 329,000 | 47.5 | 10.85 | 12.07 | 150 | 170 | 127 |

(continued)

| Example | Brief Description | $M_w$ of extractable silicone (g/mol) | Extractable silicone from adhesive (wt. %) | Instant Peel on SS (N/dm) | 24 hr Peel on SS (N/dm) | Skin Peel Adhesion (g/in) | | |
|---|---|---|---|---|---|---|---|---|
| | | | | | | T0 | T48 | T96 |
| EX-26 | AK300K (90 wt. %) + MQ Resin (10 wt. %), 3.0 Mrad e-beam dosage (280 keV) | 371,000 | 28.1 | 10.02 | 12.12 | 92 | 106 | 90 |
| CE-39 | AK200K (90 wt. %) + MQ Resin (10 wt. %), 3.5 Mrad e-beam dosage (280 keV) | 242,000 | 44.8 | 7.57 | 8.42 | NA | NA | NA |
| CE-1 | Commercial Tape A | 142,000 | 17.4 | 5.87 | 7.41 | 66 | 50 | 51 |
| NA = Not applicable or not tested. | | | | | | | | |

The above table surprisingly shows that high adhesion, including skin peel adhesions may be obtained when Mw of extractable silicone is > 275,000 g/mol and wt. % of extractable silicone is > 26%, while comparative examples, including: Commercial Tape A displayed significantly decreased peel adhesion when Mw of extractable silicone is < 275,000 g/mol.

Table 17

| Example | Brief Description | $M_w$ of extractable silicone (g/mol) | Extractable silicone from adhesive (wt. %) | Instant Peel on SS (N/dm) | Instant Peel on PP (N/dm) | Instant Peel on PVC (N/dm) | Static Shear Adhes ion (min) | Skin Peel Adhesion (g/in) | | BCA (μg/mL) | |
|---|---|---|---|---|---|---|---|---|---|---|---|
| | | | | | | | | $T0_1$ | T24 | $T0_3$ | T24 |
| EX-27 | AK1000K (70 wt. %) + MQ Resin (30 wt. %), 2.8 Mrad e-beam dosage (280 keV) | NA | NA | 13.78 | 14.72 | NA | 1610 | NA | NA | NA | NA |
| EX-28 | AK1000K (60 wt. %) + MQ Resin (40 wt. %), 3.2 Mrad e-beam dosage (280 keV) | NA | NA | 18.15 | 21.38 | NA | 2335 | NA | NA | NA | NA |
| EX-29 | AK1000K (50 wt. %) + MQ Resin (50 wt. %), 3.3 Mrad e-beam dosage (280 keV)§ | 380,000 | 44.5 | 23.47 | 19.03 | 19.4 | 10000 | 181 | 280 | 5.5 | 6.4 |
| EX-30 | AK1000K (50 wt. %) + MQ Resin (50 wt. %), 3.5 Mrad e-beam dosage (280 keV)§ | 357,000 | 37.1 | 22.89 | 25.27 | 20.94 | 5768 | NA | NA | NA | NA |
| EX-31 | AK1000K (50 wt. %) + MQ Resin (50 wt. %), 3.7 Mrad e-beam dosage (280 keV)§ | 294,000 | 38.0 | 21.02 | 25.22 | 17.99 | 10000 | 164 | 293 | 5.0 | 6.8 |
| CE-1 | Commercial Tape A | 142,000 | 17.4 | 6.90 | 9.20 | 5.51 | 20 | 58 | 46 | 4.0 | 5.1 |
| CE-17 | Commercial Tape H | NA | NA | 7.71 | 13.33 | 19.49 | 645 | 89 | 291 | 8.1 | 12.2 |
| CE-40 | Commercial Tape I | NA | NA | 8.07 | 8.93 | 9.74 | 53 | NA | NA | 13.6 | 15.8 |

NA = Not applicable or not tested.
§Backing 2 used.

The above table shows that, surprisingly, the inventive silicone adhesive tapes are provided with improved peel adhesion, shear adhesion and skin adhesion in comparison to a commercially available tape with a silicone adhesive (i.e., Commercial Tape A), yet provide a comparable level of low skin protein stripping upon removal of the tape. In comparison to a commercially available tape with an acrylate adhesive (i.e., Commercial Tape I), the inventive silicone adhesive tapes provide a dramatically lower level of skin protein stripping, yet provide higher peel and shear adhesion, wherein, the Mw of extractable silicone is > 275,000 g/mol and wt. % of extractable silicone is > 26% for the inventive silicone adhesives.

Table 18

| Example | Brief Description | $M_w$ of extractable silicone (g/mol) | Extractable silicone from adhesive (wt. %) | Instant Peel on SS (N/dm) | Instant Peel on PVC (N/dm) |
|---|---|---|---|---|---|
| EX-32 | AK1000K (95 wt. %) + MQ Resin (5 wt. %), 2.5 Mrad e-beam dosage (280 keV) | 479,000 | 31.0 | 13.08 | 11.32 |
| EX-33 | AK1000K (100 wt. %), 2.5 Mrad e-beam dosage (280 keV)* | 414,000 | 56.1 | 16.1 | 13.4 |
| *Coated at a thickness of 400 micrometers (16 mil) | | | | | |

Table 19

| Example | Brief Description | 24 hr Peel on SS (N/dm) | 24 hr Peel on PP (N/dm) | 24 hr Peel on PVC (N/dm) |
|---|---|---|---|---|
| EX-34 | AK1000K (45 wt. %) + AK60K (45 wt. %) + MQ Resin (10 wt. %), 1.5 Mrad e-beam dosage (280 keV) | 15.29 | 10.92 | 14.69 |
| EX-35 | AK1000K (45 wt. %) + AK60K (45 wt. %) + MQ Resin (10 wt. %), 2.0 Mrad e-beam dosage (280 keV) | 13.51 | 10.53 | 13.22 |
| EX-36 | AK1000K (45 wt. %) + AK60K (45 wt. %) + MQ Resin (10 wt. %), 2.5 Mrad e-beam dosage (280 keV) | 12.97 | 9.69 | 11.31 |
| EX-37 | AK1000K (45 wt. %) + AK60K (45 wt. %) + MQ Resin (10 wt. %), 3.0 Mrad e-beam dosage (280 keV) | 12.44 | 8.41 | 11.07 |
| EX-3 | AK1000K (90 wt. %) + MQ Resin (10 wt. %), 2.0 Mrad e-beam dosage (280 keV) | 10.77 | 6.56 | 9.92 |
| CE-41 | AK1000K (90 wt. %) + MQ Resin (10 wt. %), 2.4 Mrad e-beam dosage (280 keV) | 8.95 | 5.13 | 7.27 |
| EX-38 | AK1000K (67.5 wt. %) + ELEMENT 14 (22.5 wt. %) + MQ Resin (10 wt. %), 1.4 Mrad e-beam dosage (280 keV) | 16.98 | 13.78 | 17.62 |
| EX-39 | AK1000K (67.5 wt. %) + ELEMENT 14 (22.5 wt. %) + MQ Resin (10 wt. %), 1.8 Mrad e-beam dosage (280 keV) | 14.22 | 12.59 | 14.95 |
| EX-40 | AK1000K (67.5 wt. %) + ELEMENT 14 (22.5 wt. %) + MQ Resin (10 wt. %), 2.2 Mrad e-beam dosage (280 keV) | 12.18 | 10.81 | 12.13 |

(continued)

| Example | Brief Description | 24 hr Peel on SS (N/dm) | 24 hr Peel on PP (N/dm) | 24 hr Peel on PVC (N/dm) |
|---|---|---|---|---|
| EX-41 | AK1000K (45 wt. %) + ELEMENT 14 (45 wt. %) + MQ Resin (10 wt. %), 1.6 Mrad e-beam dosage (280 keV) | 15.35 | 14.00 | 16.39 |
| EX-42 | AK1000K (45 wt. %) + ELEMENT 14 (45 wt. %) + MQ Resin (10 wt. %), 2.0 Mrad e-beam dosage (280 keV) | 13.65 | 11.83 | 14.49 |
| EX-43 | AK1000K (45 wt. %) + ELEMENT 14 (45 wt. %) + MQ Resin (10 wt. %), 2.4 Mrad e-beam dosage (280 keV) | 11.61 | 10.87 | 12.06 |
| EX-44 | AK1000K (22.5 wt. %) + ELEMENT 14 (67.5 wt. %) + MQ Resin (10 wt. %), 2.2 Mrad e-beam dosage (280 keV) | 13.11 | 11.21 | 11.16 |
| EX-45 | AK1000K (22.5 wt. %) + ELEMENT 14 (67.5 wt. %) + MQ Resin (10 wt. %), 2.6 Mrad e-beam dosage (280 keV) | 11.91 | 10.35 | 12.52 |
| EX-46 | AK1000K (67.5 wt. %) + DMS-T43 (22.5 wt. %) + MQ Resin (10 wt. %), 1.7 Mrad e-beam dosage (280 keV) | 13.43 | 12.12 | 14.24 |
| EX-47 | AK1000K (67.5 wt. %) + DMS-T43 (22.5 wt. %) + MQ Resin (10 wt. %), 2.1 Mrad e-beam dosage (280 keV) | 11.88 | 12.02 | 12.53 |
| EX-48 | AK1000K (67.5 wt. %) + DMS-T43 (22.5 wt. %) + MQ Resin (10 wt. %), 2.5 Mrad e-beam dosage (280 keV) | 11.46 | 10.37 | 11.53 |
| EX-49 | AK1000K (45 wt. %) + DMS-T43 (45 wt. %) + MQ Resin (10 wt. %), 1.9 Mrad ebeam dosage (280 keV) | 14.92 | 13.16 | 15.24 |
| EX-50 | AK1000K (45 wt. %) + DMS-T43 (45 wt. %) + MQ Resin (10 wt. %), 2.3 Mrad ebeam dosage (280 keV) | 11.22 | 9.65 | 12.55 |
| EX-51 | AK1000K (67.5 wt. %) + DMS-T35 (22.5 wt. %) + MQ Resin (10 wt. %), 1.6 Mrad e-beam dosage (280 keV) | 15.98 | 13.58 | 16.76 |
| EX-52 | AK1000K (67.5 wt. %) + DMS-T35 (22.5 wt. %) + MQ Resin (10 wt. %), 2.0 Mrad e-beam dosage (280 keV) | 13.06 | 11.66 | 13.80 |
| EX-53 | AK1000K (67.5 wt. %) + DMS-T35 (22.5 wt. %) + MQ Resin (10 wt. %), 2.4 Mrad e-beam dosage (280 keV) | 10.89 | 10.47 | 11.24 |
| EX-54 | AK1000K (45 wt. %) + DMS-T35 (45 wt. %) + MQ Resin (10 wt. %), 1.8 Mrad ebeam dosage (280 keV) | 11.08 | 10.20 | 12.24 |
| EX-55 | AK1000K (67.5 wt. %) + DMS-T25 (22.5 wt. %) + MQ Resin (10 wt. %), 1.9 Mrad e-beam dosage (280 keV) | 11.76 | 11.68 | 12.39 |

(continued)

| Example | Brief Description | 24 hr Peel on SS (N/dm) | 24 hr Peel on PP (N/dm) | 24 hr Peel on PVC (N/dm) |
|---|---|---|---|---|
| EX-56 | AK1000K (67.5 wt. %) + DMS-T25 (22.5 wt. %) + MQ Resin (10 wt. %), 2.3 Mrad e-beam dosage (280 keV) | 10.66 | 11.08 | 10.99 |

The above table shows that surprisingly improved peel performance on different substrates may be achieved with a variety of blends of PDMS input materials, in comparison to CE-41, wherein only one PDMS input material was used.

Table 20

| Example | Brief Description | Instant Peel on SS (N/dm) | Instant Peel on PP (N/dm) | Static Shear Adhesion (minutes) | Tack (g) |
|---|---|---|---|---|---|
| EX-11 | AK1000K (70 wt. %) + AK60K (10 wt. %) + MQ Resin (20 wt. %), 1.0 Mrad ebeam dosage (280 keV) | 13.44 | 14.01 | 24 | 4.749 |
| EX-12 | AK1000K (70 wt. %) + AK60K (10 wt. %) + MQ Resin (20 wt. %), 2.0 Mrad ebeam dosage (280 keV) | 11.77 | 13.87 | 1640 | 4.319 |
| CE-22 | AK1000K (70 wt. %) + AK60K (10 wt. %) + MQ Resin (20 wt. %), 3.0 Mrad ebeam dosage (280 keV) | 9.47 | 10.32 | 2564 | 1.279 |
| EX-4 | AK1000K (80 wt. %) + MQ Resin (20 wt. %), 1.0 Mrad ebeam dosage (280 keV) | split | split | 0 | split |
| EX-6 | AK1000K (80 wt. %) + MQ Resin (20 wt. %), 2.0 Mrad ebeam dosage (280 keV) | 13.34 | 12.62 | 753 | 4.488 |
| CE-18 | AK1000K (80 wt. %) + MQ Resin (20 wt. %), 3.0 Mrad ebeam dosage (280 keV) | 9.75 | 9.27 | 1889 | 1.77 |

The above table shows that surprisingly improved peel performance on different substrates may be achieved with a variety of blends of PDMS input materials.

Table 21

| Example | Brief Description | Instant Peel on SS (N/dm) | Instant Peel on PP (N/dm) | Static Shear Adhesion (minutes) | Tack (g) |
|---|---|---|---|---|---|
| EX-57 | EL Polymer NA (45 wt. %) + AK60K (45 wt. %) + MQ Resin (10 wt. %), 0.5 Mrad e-beam dosage (280 keV) | 12.69 | 11.37 | 3716 | 4.562 |
| EX-58 | EL Polymer NA (45 wt. %) + AK60K (45 wt. %) + MQ Resin (10 wt. %), 1.0 Mrad e-beam dosage (280 keV) | 10.62 | 8.54 | 5583 | 3.6516 |
| CE-42 | EL Polymer NA (45 wt. %) + AK60K (45 wt. %) + MQ Resin (10 wt. %), 2.0 Mrad e-beam dosage (280 keV) | 7.99 | 6.13 | 10000 | 0.513 |
| EX-16 | EL Polymer NA (90 wt. %) + MQ Resin (10 wt. %), 0.5 Mrad e-beam dosage (280 keV) | 10.38 | 5.74 | 1575 | 0.204 |

(continued)

| Example | Brief Description | Instant Peel on SS (N/dm) | Instant Peel on PP (N/dm) | Static Shear Adhesion (minutes) | Tack (g) |
|---|---|---|---|---|---|
| CE-24 | EL Polymer NA (90 wt. %) + MQ Resin (10 wt. %), 1.0 Mrad e-beam dosage (280 keV) | 5.48 | 2.83 | 167 | 0.068 |
| CE-25 | EL Polymer NA (90 wt. %) + MQ Resin (10 wt. %), 2.0 Mrad e-beam dosage (280 keV) | 2.74 | 0.93 | 0 | 0.017 |

The above table shows that surprisingly improved peel performance on different substrates may be achieved with a variety of blends of PDMS input materials in comparison to those without using PDMS blends (e.g. EX-58 vs CE-26)

Table 22

| Example | Brief Description | Instant Peel on SS (N/dm) | Instant Peel on PP (N/dm) | Static Shear Adhesion (minutes) | Tack (g) |
|---|---|---|---|---|---|
| EX-18 | EL Polymer NA (40 wt. %) + AK60K (40 wt. %) + MQ Resin (20 wt. %), 0.5 Mrad e-beam dosage (280 keV) | 13.64 | 15.39 | 5761 | 3.974 |
| EX-19 | EL Polymer NA (40 wt. %) + AK60K (40 wt. %) + MQ Resin (20 wt. %), 1.0 Mrad e-beam dosage (280 keV) | 10.29 | 11.79 | 10000 | 3.4232 |
| CE-29 | EL Polymer NA (40 wt. %) + AK60K (40 wt. %) + MQ Resin (20 wt. %), 2.0 Mrad e-beam dosage (280 keV) | 8.54 | 8.99 | 10000 | 0.8904 |
| EX-17 | EL Polymer NA (80 wt. %) + MQ Resin (20 wt. %), 0.5 Mrad e-beam dosage (280 keV) | 9.81 | 12.67 | 3469 | 0.653 |
| CE-26 | EL Polymer NA (80 wt. %) + MQ Resin (20 wt. %), 1.0 Mrad e-beam dosage (280 keV) | 7.16 | 8.84 | 876 | 0.163 |
| CE-27 | EL Polymer NA (80 wt. %) + MQ Resin (20 wt. %), 2.0 Mrad e-beam dosage (280 keV) | 3.22 | 3.69 | 245 | 0.029 |

The above table shows that surprisingly improved peel performance on different substrates may be achieved with a variety of blends of PDMS input materials in comparison to those without using PDMS blends.

Table 23

| Example | Brief Description | Instant Peel on SS (N/dm) | Instant Peel on PP (N/dm) | Static Shear Adhesion (minutes) | Tack (g) |
|---|---|---|---|---|---|
| EX-59 | EL Polymer NA (35 wt. %) + AK60K (35 wt. %) + MQ Resin (30 wt. %), 0.5 Mrad e-beam dosage (280 keV) | 13.74 | 20.12 | 192 | 3.45 |
| EX-60 | EL Polymer NA (35 wt. %) + AK60K (35 wt. %) + MQ Resin (30 wt. %), 1.0 Mrad e-beam dosage (280 keV) | 11.34 | 17.26 | 1116 | 2.351 |

(continued)

| Example | Brief Description | Instant Peel on SS (N/dm) | Instant Peel on PP (N/dm) | Static Shear Adhesion (minutes) | Tack (g) |
|---|---|---|---|---|---|
| EX-61 | EL Polymer NA (35 wt. %) + AK60K (35 wt. %) + MQ Resin (30 wt. %), 2.0 Mrad e-beam dosage (280 keV) | 9.66 | 13.51 | 2444 | 0.979 |
| CE-43 | EL Polymer NA (35 wt. %) + AK60K (35 wt. %) + MQ Resin (30 wt. %), 3.0 Mrad e-beam dosage (280 keV) | 8.59 | 12.00 | 10000 | 0.348 |
| EX-20 | EL Polymer NA (70 wt. %) + MQ Resin (30 wt. %), 0.5 Mrad e-beam dosage (280 keV) | 10.17 | 12.05 | 1086 | 2.08 |
| CE-31 | EL Polymer NA (70 wt. %) + MQ Resin (30 wt. %), 1.0 Mrad e-beam dosage (280 keV) | 8.47 | 8.55 | 1990 | 0.5 |
| CE-32 | EL Polymer NA (70 wt. %) + MQ Resin (30 wt. %), 2.0 Mrad e-beam dosage (280 keV) | 5.01 | 6.41 | 126 | 0.114 |

The above table shows that surprisingly improved peel performance on different substrates may be achieved with a variety of blends of PDMS input materials in comparison to those without using PDMS blends (e.g. EX-60 vs CE-32).

Table 24

| Example | Brief Description | Instant Peel on SS (N/dm) | Instant Peel on PP (N/dm) | Static Shear Adhesion (minutes) | Tack (g) |
|---|---|---|---|---|---|
| EX-62 | DMS-T72 (45 wt. %) + AK60K (45 wt. %) + MQ Resin (10 wt. %), 0.5 Mrad ebeam dosage (280 keV) | 13.20 | 12.64 | 2581 | 3.782 |
| EX-63 | DMS-T72 (45 wt. %) + AK60K (45 wt. %) + MQ Resin (10 wt. %), 1.0 Mrad ebeam dosage (280 keV) | 10.91 | 8.77 | 6268 | 3.153 |
| CE-44 | DMS-T72 (45 wt. %) + AK60K (45 wt. %) + MQ Resin (10 wt. %), 2.0 Mrad ebeam dosage (280 keV) | 8.30 | 5.89 | 10000 | 0.336 |
| CE-45 | DMS-T72 (90 wt. %) + MQ Resin (10 wt. %), 0.5 Mrad ebeam dosage (280 keV) | 7.73 | 4.79 | 78 | 0.012 |
| CE-46 | DMS-T72 (90 wt. %) + MQ Resin (10 wt. %), 1.0 Mrad ebeam dosage (280 keV) | 4.48 | 1.39 | 0 | 0 |
| CE-47 | DMS-T72 (90 wt. %) + MQ Resin (10 wt. %), 2.0 Mrad ebeam dosage (280 keV) | 1.99 | 0.44 | 0 | 0 |

The above table shows that surprisingly improved peel performance on different substrates may be achieved with a variety of blends of PDMS input materials in comparison to those without using PDMS blends (e.g. EX-62 vs CE-45 and EX-63 vs CE-46).

Table 25

| Example | Brief Description | Instant Peel on SS (N/dm) | Instant Peel on PP (N/dm) | Static Shear Adhesion (minutes) | Tack (g) |
|---|---|---|---|---|---|
| EX-64 | DMS-T72 (40 wt. %) + AK60K (40 wt. %) + MQ Resin (20 wt. %), 0.5 Mrad ebeam dosage (280 keV) | 12.38 | 16.34 | 1279 | 4.282 |
| EX-65 | DMS-T72 (40 wt. %) + AK60K (40 wt. %) + MQ Resin (20 wt. %), 1.0 Mrad ebeam dosage (280 keV) | 10.21 | 13.69 | 4761 | 4.271 |
| CE-48 | DMS-T72 (40 wt. %) + AK60K (40 wt. %) + MQ Resin (20 wt. %), 2.0 Mrad ebeam dosage (280 keV) | 8.14 | 10.17 | 10000 | 0.931 |
| EX-66 | DMS-T72 (80 wt. %) + MQ Resin (20 wt. %), 0.5 Mrad ebeam dosage (280 keV) | 12.15 | 8.59 | 834 | 0.524 |
| CE-49 | DMS-T72 (80 wt. %) + MQ Resin (20 wt. %), 1.0 Mrad ebeam dosage (280 keV) | 8.40 | 5.46 | 41 | 0.04 |
| CE-50 | DMS-T72 (80 wt. %) + MQ Resin (20 wt. %), 2.0 Mrad ebeam dosage (280 keV) | 2.53 | 1.43 | 0 | 0 |

The above table shows that surprisingly improved peel performance on different substrates may be achieved with a variety of blends of PDMS input materials in comparison to those without using PDMS blends (e.g. EX-65 vs CE-49).

Table 26

| Example | Brief Description | Instant Peel on SS (N/dm) | Instant Peel on PP (N/dm) | Static Shear Adhesion (minutes) | Tack (g) |
|---|---|---|---|---|---|
| EX-67 | DMS-T72 (35 wt. %) + AK60K (35 wt. %) + MQ Resin (30 wt. %), 0.5 Mrad ebeam dosage (280 keV) | 16.64 | 23.97 | 284 | 4.147 |
| EX-22 | DMS-T72 (35 wt. %) + AK60K (35 wt. %) + MQ Resin (30 wt. %), 1.0 Mrad ebeam dosage (280 keV) | 13.28 | 15.74 | 1185 | 4.574 |
| EX-23 | DMS-T72 (35 wt. %) + AK60K (35 wt. %) + MQ Resin (30 wt. %), 2.0 Mrad ebeam dosage (280 keV) | 10.10 | 11.53 | 10000 | 1.856 |
| EX-21 | DMS-T72 (70 wt. %) + MQ Resin (30 wt. %), 0.5 Mrad ebeam dosage (280 keV) | 14.80 | 15.49 | 2569 | 1.888 |
| CE-34 | DMS-T72 (70 wt. %) + MQ Resin (30 wt. %), 1.0 Mrad ebeam dosage (280 keV) | 10.89 | 10.14 | 840 | 0.515 |
| CE-35 | DMS-T72 (70 wt. %) + MQ Resin (30 wt. %), 2.0 Mrad ebeam dosage (280 keV) | 6.25 | 7.75 | 53 | 0.046 |

The above table shows that surprisingly improved peel performance on different substrates may be achieved with a variety of blends of PDMS input materials in comparison to those without using PDMS blends (e.g. EX-23 vs CE-35),

Adhesive Tape Preparation (Dual Cured)

For dual cured adhesive tapes (i.e., those cured by both e-beam and addition cure), the following general procedure was employed. 80 parts AK1000K, 20 parts MQ Resin, 2-4 parts EX100 Part A, and EX100 Part B (1 wt. %

based on the amount of EX100 Part A) were mixed with a high speed mixer. The mixed components were coated onto Backing 1 using a knife coater with 100 micrometers (4 mils) gap. The coated backing was placed in an oven heated to a temperature of 70 °C for a period of 30 minutes to provide a partially cured tape. The partially cured coating was then crosslinked with e-beam irradiation in an inerted chamber at the indicated dosage, at an accelerating voltage of 300 keV, to form tacky adhesive tapes (as previously described). The coated and cured adhesive tapes were then laminated to Release Liner 1.

Table 27

| Example | Brief Description | $M_w$ of extractable silicone (g/mol) | Extractable silicone from adhesive (wt. %) |
|---|---|---|---|
| EX-68 | AK1000K (78.4 wt. %) + MQ Resin (19.6 wt. %) + EX100 (2 wt. %), 2.5 Mrad e-beam dosage (280 keV) | 379,000 | 48.8 |
| EX-69 | AK1000K (78.4 wt. %) + MQ Resin (19.6 wt. %) + EX100 (2 wt. %), 3.0 Mrad e-beam dosage (280 keV) | 281,000 | 41.2 |
| CE-51 | AK1000K (78.4 wt. %) + MQ Resin (19.6 wt. %) + EX100 (2 wt. %), 3.5 Mrad e-beam dosage (280 keV) | 251,000 | 36.3 |
| CE-52 | AK1000K (78.4 wt. %) + MQ Resin (19.6 wt. %) + EX100 (2 wt. %), 4.0 Mrad e-beam dosage (280 keV) | 201,000 | 30.6 |
| EX-70 | AK1000K (76.9 wt. %) + MQ Resin (19.2 wt. %) + EX100 (3.8 wt. %), 2.5 Mrad e-beam dosage (280 keV) | 353,000 | 49.3 |
| CE-53 | AK1000K (76.9 wt. %) + MQ Resin (19.2 wt. %) + EX100 (3.8 wt. %), 3.0 Mrad e-beam dosage (280 keV) | 260,000 | 40.8 |
| CE-54 | AK1000K (76.9 wt. %) + MQ Resin (19.2 wt. %) + EX100 (3.8 wt. %), 3.5 Mrad e-beam dosage (280 keV) | 235,000 | 34.5 |
| EX-71 | AK1000K (74.1 wt. %) + MQ Resin (18.5 wt. %) + EX100 (7.4 wt. %), 2.5 Mrad e-beam dosage (280 keV) | 308,000 | 37.0 |
| CE-55 | AK1000K (74.1 wt. %) + MQ Resin (18.5 wt. %) + EX100 (7.4 wt. %), 3.0 Mrad e-beam dosage (280 keV) | 260,000 | 35.3 |
| CE-56 | AK1000K (74.1 wt. %) + MQ Resin (18.5 wt. %) + EX100 (7.4 wt. %), 3.5 Mrad e-beam dosage (280 keV) | 220,000 | 29.5 |

The above table shows that surprisingly improved peel performance on different substrates may be achieved with a variety of dual cure formulations.

Example 72

DMS-V52 (68 wt%), HMS-993 (2 wt%), MQ Resin (30 wt%) and Pt Catalyst (50 ppm) were dissolved in sufficient toluene to provide solution which was 25 wt. % solids. The solution was coated onto Backing 1 using a knife coater. The toluene was removed and the adhesive was cured by placing the coating in a drying oven maintained at 70°C for 15 minutes. The dry thickness of the adhesive was 100 micrometers (4 mils). The sample was laminated with the Release Liner 1.

Table 29

| Example | Brief Description | Instant Peel on PP (N/dm) | 24 hr Peel on SS (N/dm) |
|---|---|---|---|
| CE-1 | Commercial Tape A | 10.88 | 9.68 |
| EX-72 | 68/2/30 DMS-V52/HMS-993/MQ Resin | 15.68 | 12.51 |
| | DMS-V52 (68 wt. %) + HMS-993 (2 wt. %) + MQ Resin (30 wt. %), | | |

Example 73

OHX-4070 (80 wt. %), MQ Resin (20 wt. %), and tetramethylammonium hydroxide (0.03 wt.% based on the amount of OHX-4070) were fed into a twin screw extruder at a temperature of approximately 204°C (400°F) and die coated at 93°C (200°F) onto Backing 1 at a thickness of 100 micrometers (4 mil) using conventional coating techniques.

Table 30

| Example | Brief Description | $M_w$ of extractable silicone (g/mol) | Extractable silicone from adhesive (wt. %) | 24 hr Peel on SS (N/dm) | 24 hr Peel on PVC (N/dm) |
|---|---|---|---|---|---|
| EX-73 | 80/20 OHX-4070/MQ Resin/ 0.03% TMAH | 605,000 | 57.2 | 10.42 | 10.21 |

Preparation of Peroxide Cured Silicone Adhesive Tapes

The silicone adhesives ingredients including silicone elastomers, MQ Resin tackifier, and Peroxide curative (benzoyl peroxide commercially available as LUPEROX A75 from Aldrich Chemicals) were mixed in toluene at 50% solids and placed on roller overnight according to the amounts shown in Table 31. In Table 31 pph refers to parts per hundred parts by weight of curable components and MQ Resin (i.e 1.5 pph of Peroxide refers to 1.5 pph is 1.5 parts by weight per 100 parts by weight of curable components and MQ Resin). The mixed solutions were coated on Backing 2 through a knife coater with an 8 mil (203 micrometers) gap. The coated films were dried for 30 minutes at 70°C and followed by curing for 30 minutes at 160°C. The resulting samples were further tested for $M_w$ of extractable silicones, weight % of silicones from adhesives, and instant peel adhesion on SS (stainless steel). The data are recorded in the Table 31.

Table 31

| | **Brief Description** | **$M_W$ of extractable silicone (g/mol)** | **Extractable silicone from adhesive (wt. %)** | **Instant Peel on SS (oz/in)** |
|---|---|---|---|---|
| **Ex 74** | 70pph DMS-T72, 30pph MQ Resin, and 1.5pph Peroxide | 822,000 | 28.9 | 30.47 |
| **Ex 75** | 70pph EL polymer NA, 30pph MQ Resin, and 1.5pph Peroxide | 815,000 | 25.9 | 20.66 |
| **Ex 76** | 70pph AK1000K, 30pph MQ Resin, and 1.5pph Peroxide | 936,000 | 60.4 | 20.96 |
| **Ex 77** | 40pph DMS-T72, 30pph AK300K, 30pph MQ Resin, and 1.5 pph Peroxide | 750,000 | 35.5 | 13.6 |
| **Ex 78** | 40pph EL polymer NA, 30pph AK300K, 30pph MQ Resin, and 1.5 pph Peroxide | 735,000 | 34.6 | 13.69 |
| **Ex 79** | 40pph DMS AK1000K, 30pph AK300K, 30pph MQ Resin, and 1.5 pph Peroxide | 578,000 | 60.2 | 13.73 |

**Claims**

1. A gel adhesive composition comprising:

   a crosslinked polymeric siloxane matrix; and
   a polymeric fluid with a weight average molecular weight greater than 275,000 grams/mole, wherein the polymeric fluid is extractable, and wherein the weight percentage of the extractable polymeric fluid comprises 26-80 weight % of the gel adhesive composition, the weight average molecular weight and weight percentage being measured as described in the description,
   wherein the polymeric fluid is a siloxane polymeric fluid described by Formula 1:

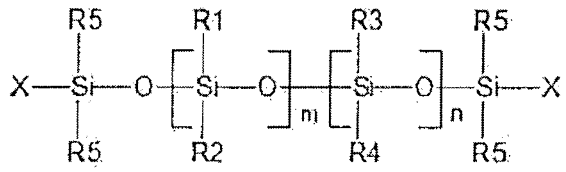

Formula 1

   wherein R1, R2, R3, and R4 are independently selected from the group consisting of a substituted or unsubstituted alkyl or aryl group; each R5 is an alkyl group, each X is an R5 group or a -OH group, and n and m are integers, wherein at least one of m or n is not zero.

2. The gel adhesive composition of claim 1, further comprising a siloxane tackifying resin.

3. The gel adhesive composition of claim 1, wherein the weight average molecular weight of the polymeric fluid is greater than 300,000 grams/mole.

4. The gel adhesive composition of claim 1, wherein the weight percentage of the extractable polymeric fluid comprises 30-60 weight % of the gel adhesive composition.

5. The gel adhesive composition of claim 1, wherein the crosslinked polymeric siloxane matrix is prepared by thermal curing, radiation curing, condensation curing, or a combination thereof.

6. The gel adhesive composition of claim 5, wherein the crosslinked polymer siloxane matrix is prepared by electron beam curing of a non-functional siloxane.

7. A gel adhesive article comprising:

   a substrate with a first major surface and a second major surface; and
   a gel adhesive composition disposed on at least a portion of the first major surface of the substrate, wherein the gel adhesive composition comprises:

      a crosslinked polymeric siloxane matrix; and
      a polymeric fluid with a weight average molecular weight greater than 275,000 grams/mole, wherein the polymeric fluid is extractable, and wherein the weight percentage of the extractable polymeric fluid comprises 26-80 weight % of the gel adhesive composition, the weight average molecular weight and weight percentage being measured as described in the description;
      wherein the polymeric fluid is a siloxane polymeric fluid described by Formula 1:

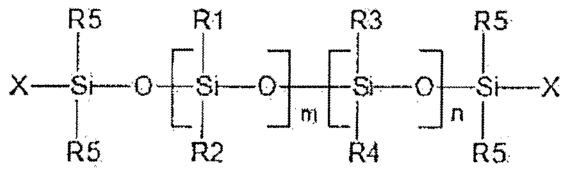

Formula 1

wherein R1, R2, R3, and R4 are independently selected from the group consisting of a substituted or unsubstituted alkyl or aryl group; each R5 is an alkyl group, each X is an R5 group or a -OH group, and n and m are integers, wherein at least one of m or n is not zero.

8. The gel adhesive article of claim 7, wherein the gel adhesion article has a 180° Peel Adhesion value to stainless steel of at least 10.0 Newtons/decimeter, with the 180°Peel Adhesion being measured as described in the description.

9. The gel adhesive article of claim 7, wherein the gel adhesion composition has a Skin Peel Adhesion value of greater than 100 grams/inch, with the Skin Peel Adhesion being measured as described in the description.

10. The gel adhesive article of claim 7, wherein the gel adhesion composition has a bicinchoninic acid assay (BCA) value of 10 micrograms per milliliter or less, with the BCA value being measured as described in the description.

11. The gel adhesive article of claim 7, wherein the substrate comprises a polymeric film, a fabric, a non-woven, a foam, a paper, a mesh, an adhesive, or a release liner.

**Patentansprüche**

1. Eine Gelklebstoffzusammensetzung, umfassend:

eine vernetzte Siloxanpolymer-Matrix; und
ein Polymerfluid mit einem Gewichtsmittel des Molekulargewichts von mehr als 275.000 Gramm/Mol, wobei das Polymerfluid extrahierbar ist, und wobei der Gewichtsprozentsatz des extrahierbaren Polymerfluids 26-80 Gew.-% der Gelklebstoffzusammensetzung umfasst, wobei das Gewichtsmittel des Molekulargewichts und der Gewichtsprozentsatz wie in der Beschreibung angegeben gemessen werden,
wobei das Polymerfluid ein Siloxanpolymerfluid ist, das durch Formel 1 beschrieben wird:

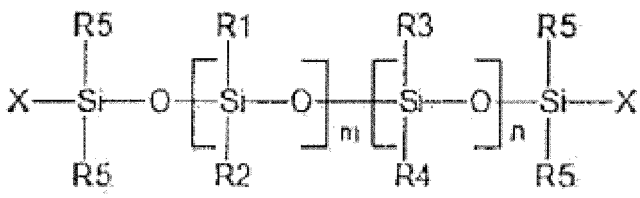

Formel 1

wobei R1, R2, R3 und R4 unabhängig aus der Gruppe ausgewählt sind, bestehend aus einer substituierten oder unsubstituierten Alkyl- oder Arylgruppe; jedes R5 eine Alkylgruppe ist, jedes X eine R5-Gruppe oder eine -OH-Gruppe ist, und n und m ganze Zahlen sind, wobei mindestens eines von m oder n nicht Null ist.

2. Die Gelklebstoffzusammensetzung nach Anspruch 1, ferner umfassend ein klebrigmachendes Siloxanharz.

3. Die Gelklebstoffzusammensetzung nach Anspruch 1, wobei das Gewichtsmittel des Molekulargewichts des Polymerfluids größer als 300.000 Gramm/Mol ist.

**4.** Die Gelklebstoffzusammensetzung nach Anspruch 1, wobei der Gewichtsprozentsatz des extrahierbaren Polymerfluids 30-60 Gew-% der Gelklebstoffzusammensetzung umfasst.

**5.** Die Gelklebstoffzusammensetzung nach Anspruch 1, wobei die vernetzte Siloxanpolymer-Matrix durch Wärmehärtung, Strahlungshärtung, Kondensationshärtung oder eine Kombination davon hergestellt wird.

**6.** Die Gelklebstoffzusammensetzung nach Anspruch 5, wobei die vernetzte Siloxanpolymer-Matrix durch Elektronenstrahlhärtung eines nichtfunktionellen Siloxans hergestellt wird.

**7.** Ein Gelklebstoffgegenstand, umfassend:

ein Substrat mit einer ersten Hauptoberfläche und einer zweiten Hauptoberfläche; und
eine Gelklebstoffzusammensetzung, die auf mindestens einem Abschnitt der ersten Hauptoberfläche des Substrats angeordnet ist, wobei die Gelklebstoffzusammensetzung umfasst:

eine vernetzte Siloxanpolymer-Matrix; und
ein Polymerfluid mit einem Gewichtsmittel des Molekulargewichts von mehr als 275.000 Gramm/Mol, wobei das Polymerfluid extrahierbar ist, und wobei der Gewichtsprozentsatz des extrahierbaren Polymerfluids 26-80 Gew.-% der Gelklebstoffzusammensetzung umfasst, wobei das Gewichtsmittel des Molekulargewichts und der Gewichtsprozentsatz wie in der Beschreibung angegeben gemessen werden;
wobei das Polymerfluid ein Siloxanpolymerfluid ist, das durch Formel 1 beschrieben wird:

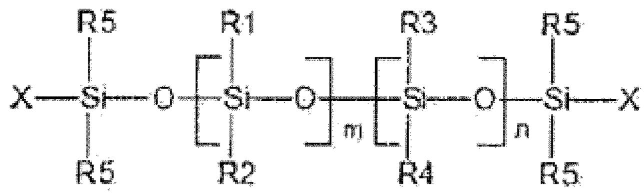

Formel 1

wobei R1, R2, R3 und R4 unabhängig aus der Gruppe ausgewählt sind, bestehend aus einer substituierten oder unsubstituierten Alkyl- oder Arylgruppe; jedes R5 eine Alkylgruppe ist, jedes X eine R5-Gruppe oder eine -OH-Gruppe ist, und n und m ganze Zahlen sind, wobei mindestens eines von m oder n nicht Null ist.

**8.** Der Gelklebstoffgegenstand nach Anspruch 7, wobei der Gelklebstoffgegenstand einen 180°-Schäladhäsionswert an rostfreiem Stahl von mindestens 10,0 Newton/Dezimeter aufweist, wobei die 180°-Schäladhäsion wie in der Beschreibung angegeben gemessen wird.

**9.** Der Gelklebstoffgegenstand nach Anspruch 7, wobei die Gelklebstoffzusammensetzung einen Haut-Schäladhäsionswert von größer als 100 Gramm/Zoll aufweist, wobei die Haut-Schäladhäsion wie in der Beschreibung angegeben gemessen wird.

**10.** Der Gelklebstoffgegenstand nach Anspruch 7, wobei die Gelklebstoffzusammensetzung einen Bicinchoninsäure-Assay-Wert (BCA-Wert) von 10 Mikrogramm pro Milliliter oder weniger aufweist, wobei der BCA-Wert wie in der Beschreibung angegeben gemessen wird.

**11.** Der Gelklebstoffgegenstand nach Anspruch 7, wobei das Substrat eine Polymerfolie, ein Gewebe, ein Vlies, einen Schaum, ein Papier, ein Netz, einen Klebstoff oder eine Trennfolie umfasst.

**Revendications**

**1.** Composition adhésive en gel comprenant :

une matrice de siloxane polymère réticulée ; et

un fluide polymère avec une masse moléculaire moyenne en poids supérieure à 275 000 grammes/mole, dans laquelle le fluide polymère est extractible, et dans laquelle le pourcentage en poids du fluide polymère extractible représente 26 à 80 % en poids de la composition adhésive en gel, la masse moléculaire moyenne en poids et le pourcentage en poids étant mesurés comme indiqué dans la description,
dans laquelle le fluide polymère est un fluide polymère siloxane décrit par la Formule 1 :

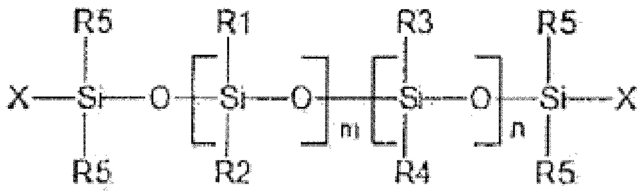

Formule 1

dans laquelle R1, R2, R3 et R4 sont choisis indépendamment dans le groupe constitué d'un groupe alkyle ou aryle substitué ou non substitué ; chaque R5 est un groupe alkyle, chaque X est un groupe R5 ou un groupe -OH, et n et m sont des nombres entiers, dans laquelle au moins un de m ou de n n'est pas zéro.

2. Composition adhésive en gel selon la revendication 1, comprenant en outre une résine collante siloxane.

3. Composition adhésive en gel selon la revendication 1, dans laquelle la masse moléculaire moyenne en poids du fluide polymère est supérieure à 300 000 grammes/mole.

4. Composition adhésive en gel selon la revendication 1, dans laquelle le pourcentage en poids du fluide polymère extractible représente 30 à 60 % en poids de la composition adhésive en gel.

5. Composition adhésive en gel selon la revendication 1, dans laquelle la matrice de siloxane polymère réticulée est préparée par durcissement thermique, durcissement par rayonnement, durcissement par condensation, ou une combinaison de ceux-ci.

6. Composition adhésive en gel selon la revendication 5, dans laquelle la matrice de siloxane polymère réticulée est préparée par durcissement par faisceau d'électrons d'un siloxane non fonctionnel.

7. Article adhésif en gel comprenant :

un substrat avec une première surface principale et une seconde surface principale ; et
une composition adhésive en gel disposée sur au moins une partie de la première surface principale du substrat, dans lequel la composition adhésive en gel comprend :

une matrice de siloxane polymère réticulée ; et
un fluide polymère avec une masse moléculaire moyenne en poids supérieure à 275 000 grammes/mole, dans lequel le fluide polymère est extractible, et dans lequel le pourcentage en poids du fluide polymère extractible représente 26 à 80 % en poids de la composition adhésive en gel, la masse moléculaire moyenne en poids et le pourcentage en poids étant mesurés comme indiqué dans la description ;
dans lequel le fluide polymère est un fluide polymère siloxane décrit par la Formule 1 :

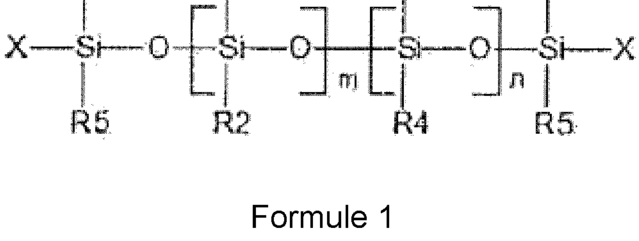

Formule 1

dans lequel R1, R2, R3 et R4 sont choisis indépendamment dans le groupe constitué d'un groupe alkyle ou aryle substitué ou non substitué ; chaque R5 est un groupe alkyle, chaque X est un groupe R5 ou un groupe -OH, et n et m sont des nombres entiers, dans lequel au moins un de m ou de n n'est pas zéro.

8. Article adhésif en gel selon la revendication 7, dans lequel l'article adhésif en gel a une valeur d'adhésion par pelage à 180° à l'acier inoxydable d'au moins 10,0 Newtons/décimètre, l'adhésion par pelage à 180° étant mesurée comme décrit dans la description.

9. Article adhésif en gel selon la revendication 7, dans lequel la composition adhésive en gel a une valeur d'adhésion au pelage de peau supérieure à 100 grammes/pouce, l'adhésion au pelage de peau étant mesurée comme décrit dans la description.

10. Article adhésif en gel selon la revendication 7, dans lequel la composition adhésive en gel a une valeur de dosage par acide bicinchoninique (BCA) de 10 microgrammes par millilitre ou moins, la valeur BCA étant mesurée comme décrit dans la description.

11. Article adhésif en gel selon la revendication 7, dans lequel le substrat comprend un film polymère, un tissu, un non-tissé, une mousse, un papier, un maillage, un adhésif, ou une feuille de protection amovible.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110212325 A, Determan
- US 4838253 A, Brassington
- US 6051747 A, Lindqvist
- US 5891076 A, Fabo
- US 20100331785 A, Fabo
- US 2015376345 A1
- WO 2000068336 A, Ko
- WO 2004111151 A
- WO 2006003853 A, Nakamura
- WO 2010056541 A
- WO 2010056543 A, Liu
- US 5091483 A, Mazurek
- US 5514730 A, Mazurek
- US 6610760 B, Eckberg
- WO 2014074336 A, Chatterjee
- US 3645835 A
- US 4595001 A
- US 5088483 A
- US 5160315 A
- US 5866222 A, Seth
- US 61579115
- US 4060664 A
- US 9890302 B, Tse
- WO 2016100021 A, Kluge
- US 8221863 B
- US 8541481 B
- WO 2016191236 A
- WO 2016191235 A
- US 9359529 B


### Non-patent literature cited in the description


- T-series Catalysts. Air Products and Chemicals, Inc,